(19) Europäisches Patentamt
European Patent Office
Office européen des brevets

(11) EP 0 879 855 A1

(12) **EUROPEAN PATENT APPLICATION**
published in accordance with Art. 158(3) EPC

(43) Date of publication:
**25.11.1998 Bulletin 1998/48**

(21) Application number: **97913432.7**

(22) Date of filing: **25.11.1997**

(51) Int. Cl.$^6$: **C08L 101/00**, C08K 5/00, C08K 5/04, C08L 93/04, C08L 57/02, B32B 27/18, B32B 27/28, C08J 5/18, A01G 9/14, C08L 23/00, C08L 27/06

(86) International application number:
**PCT/JP97/04272**

(87) International publication number:
**WO 98/24848 (11.06.1998 Gazette 1998/23)**

(84) Designated Contracting States:
**ES FR IT**

(30) Priority: **22.11.1996 JP 312227/96**
**17.03.1997 JP 63481/97**

(71) Applicant:
**Mitsui Chemicals, Inc.**
**Tokyo 100 (JP)**

(72) Inventors:
- **OHTA, Seiji,**
**Mitsui Chemicals, Inc.**
**Kuga-gun, Yamaguchi 740 (JP)**
- **KURISU, Masayoshi,**
**Mitsui Chemicals, Inc.**
**Kuga-gun, Yamaguchi 740 (JP)**
- **OHE, Tatsuya,**
**Mitsui Chemicals, Inc.**
**Kuga-gun, Yamaguchi 740 (JP)**
- **NAKAGAWA, Mikio,**
**Mitsui Chemicals, Inc.**
**Waki-cho, Kuga-gun, Yamaguchi 740 (JP)**
- **TAN, Junji,**
**Mitsui Chemicals, Inc.**
**Waki-cho, Kuga-gun, Yamaguchi 740 (JP)**
- **KASAI, Tetsuji,**
**Mitsui Chemicals, Inc.**
**Waki-cho, Kuga-gun, Yamaguchi 740 (JP)**

(74) Representative: **HOFFMANN - EITLE**
**Patent- und Rechtsanwälte**
**Arabellastrasse 4**
**81925 München (DE)**

# (54) THERMOPLASTIC RESIN COMPOSITION AND FILM MADE FROM THE COMPOSITION

(57) A thermoplastic resin composition comprising:

(A) a thermoplastic resin,
(B) a surface active agent in an amount of 0.01 to 30 parts by weight based on 100 parts by weight of the thermoplastic resin, and
(C) an organic compound in an amount of 0.01 to 30 parts by weight based on 100 parts by weight of the thermoplastic resin, said organic compound being a functional group-containing organic compound and containing 0.1 to 10 mmol/g of a functional group having two atoms a, b bonded to each other whose atomic charges Ea, Eb, as determined by calculation of molecular orbital method, satisfy the following relation (1):

$$0.25 \leq |Ea-Eb| \leq 0.7 \qquad (1)$$

wherein Ea and Eb represent atomic charges of the atom a and the atom b, respectively.

If films are produced from the thermoplastic resin composition, the films exhibit antistatic properties and anti-fogging properties immediately after the films are produced, and they retain stable properties over a long period of time.

EP 0 879 855 A1

## Description

### TECHNICAL FIELD

The present invention relates to thermoplastic resin compositions, and more particularly to thermoplastic resin compositions which exhibit antistatic properties and anti-fogging properties immediately after they are molded and which retain stable antistatic properties and anti-fogging properties over a long period of time. The thermoplastic resin compositions are used for films, sheets, injection molded articles and masterbatch of anti-fogging agents or antistatic agents, which need long-term anti-fogging properties and long-term antistatic properties.

### BACKGROUND ART

Because of their excellent processability, chemical resistance and mechanical properties, thermoplastic resins such as polyolefin, polyamide, polyester, polyacetal, polystyrene, acrylonitrile/butadiene/styrene copolymer, acrylonitrile/styrene copolymer, polymethacrylate, polycarbonate, polyphenylene oxide, polyvinyl chloride, polyvinylidene chloride, polyvinyl acetate and ethylene/(meth)acrylate copolymer are molded into injection molded articles, hollow molded articles, films, sheets, fibers, etc., and these products are applied to various uses. The thermoplastic resins, however, have great surface resistance and are easily electrostatically charged, and therefore various surface active agents are added as antistatic agents in the molding process.

The thermoplastic resins are also used to produce films or molded articles for agriculture or foods, but the resins have large contact angle with water, so that fine water droplets are easily formed on the surfaces of the films or the molded articles. Such films or molded articles are apt to be unsuitable for the intended uses or to have bad appearance. On this account, the resins are blended with various surface active agents as anti-fogging agents in the molding process.

The surface active agents added to the thermoplastic resins include those which exhibit antistatic properties and anti-fogging properties immediately after the molding process and those which exhibit such properties over a long period of time. These surface active agents are properly used according to the intended purpose.

Most of the surface active agents which exhibit antistatic properties and anti-fogging properties over a long period of time hardly exhibit these properties immediately after the molding process. If a large amount of a surface active agent having immediate effect is used in order to solve this problem, defects of products such as surface tackiness and whitening are easily brought about in the long-term use. In order to cope with the problem, therefore, a surface active agent which becomes an antistatic agent or an anti-fogging agent having immediate effect and a surface active agent which becomes an antistatic agent or an anti-fogging agent exerting effect over a long period of time have been used in proper combination. Even in the use of a proper combination of the surface active agents, however, it is difficult to render the surface active agents to exhibit the properties over a long period of time because of unstable bleeding of the surface active agents. Particularly, it is very difficult to obtain molded products or films which can stably retain antistatic properties and anti-fogging properties for a long period of time in the outdoor environment where the molded products or the films are exposed to the weather or to great temperature variation.

The present inventors have earnestly studied in view of the prior art, and as a result, they have found that molded products obtained from a thermoplastic resin composition comprising a thermoplastic resin, an organic compound satisfying a specific relation and a specific surface active agent exhibit excellent antistatic properties and anti-fogging properties immediately after the molding process and retain stable properties over a long period of time. Based on the finding, the present invention has been accomplished.

### OBJECT OF THE INVENTION

The present invention has been made under such circumstances as mentioned above, and it is an object of the invention to provide a thermoplastic resin composition which exhibits excellent antistatic properties and anti-fogging properties immediately after it is molded and which retains stable properties over a long period of time, and to provide films, sheets, molded products, etc. comprising the composition.

### DISCLOSURE OF THE INVENTION

#### Summary of the Invention

The thermoplastic resin composition according to the present invention comprises:

(A) a thermoplastic resin,

(B) a surface active agent in an amount of 0.01 to 30 parts by weight based on 100 parts by weight of the thermoplastic resin (A), and

(C) an organic compound in an amount of 0.01 to 30 parts by weight based on 100 parts by weight of the thermoplastic resin (A), said organic compound being a functional group-containing organic compound and containing 0.1 to 10 mmol/g of a functional group having two atoms a, b bonded to each other whose atomic charges Ea, Eb, as determined by calculation of molecular orbital method, satisfy the following relation (1), preferably the following relation (2);

$$0.25 \leq |Ea\text{-}Eb| \leq 0.7 \quad (1)$$

$$0.4 \leq |Ea\text{-}Eb| \leq 0.7 \quad (2)$$

wherein Ea and Eb represent atomic charges of the atom a and the atom b, respectively.

In the present invention, the functional group satisfying the relation (1) is preferably at least one group selected from a carboxyl group, a carbonyl group, a hydroxyl group, an aromatic group, an amino group, a sulfone group and an ester group.

In the present invention, the functional group satisfying the relation (2) is preferably at least one group selected from a carboxyl group, a carbonyl group, a hydroxyl group, an amino group, a sulfone group and an ester group.

In the present invention, the functional group-containing organic compound (C) is preferably an ester of at least one rosin acid selected from dehydroabietic acid, dihydroabietic acid and dihydropimaric acid or an ester of a derivative of the rosin acid (an ester of a resin acid contained in rosin or an ester of a derivative of the resin acid); or

the functional group-containing organic compound (C) is preferably at least one compound selected from the group consisting of a hydrocarbon resin, a modified polyolefin, an oxidized polyolefin and a natural wax.

In the present invention, the thermoplastic resin (A) is preferably at least one thermoplastic resin selected from a polyolefin, a polyamide, a polyester, a polyacetal, polystyrene, an acrylonitrile/butadiene/styrene copolymer, a polymethacrylate, a polycarbonate, polyphenylene oxide, polyvinyl chloride, polyvinylidene chloride, polyvinyl acetate, an ethylene/vinyl acetate copolymer and an ethylene/(meth)acrylate copolymer. The thermoplastic resin (A) is more preferably at least one thermoplastic resin selected from the group consisting of a polyolefin, polyvinyl chloride and an ethylene/vinyl acetate copolymer.

In the present invention, the thermoplastic resin (A) preferably has a weight-average molecular weight of not less than 60,000.

In the present invention, the surface active agent (B) is preferably a nonionic surface active agent having a molecular weight of less than 1,000. The surface active agent (B) is more preferably at least one compound selected from a glycerol fatty ester, a glycerol fatty diester, a glycerol fatty triester, a polyethylene glycol fatty ester, a higher alcohol ethylene oxide adduct, N,N-bis(2-hydroxyethyl)aliphatic amine, N,N-bis(2-hydroxyisopropyl)aliphatic amine, N,N-bis(2-hydroxyethyl)aliphatic amide and N,N-bis(2-hydroxyisopropyl)aliphatic amide.

In the present invention, it is preferable that the modified polyolefin is obtained by graft copolymerizing a polyolefin with at least one monomer selected from the group consisting of an unsaturated carboxylic acid, its derivative and an ethylene type unsaturated monomer containing at least one of a hydroxyl group, an amino group and a sulfone group and has a graft modification degree of 0.1 to 20 % by weight and an intrinsic viscosity [$\eta$] of 0.01 to 1.8 dl/g.

In the present invention, it is preferable that the oxidized polyolefin is obtained by oxidizing a polyolefin by an oxygen-containing gas and has an acid value of 0.1 to 100 mgKOH/g and an intrinsic viscosity [$\eta$] of 0.01 to 0.6 dl/g.

In the present invention, the natural wax is preferably at least one wax selected from the group consisting of carnauba wax, rice wax, bees wax, montan wax and saponified waxes obtained by at least partly saponifying these waxes.

In the present invention, the ester of a resin acid contained in rosin (said acid being referred to as "rosin acid" hereinafter, said ester being referred to as "rosin ester" hereinafter) is preferably an ester of at least one rosin acid selected from a rosin acid represented by the following formula (Ia) and a rosin acid represented by the following formula (Ib):

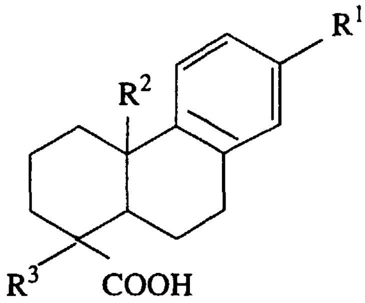

(Ia)

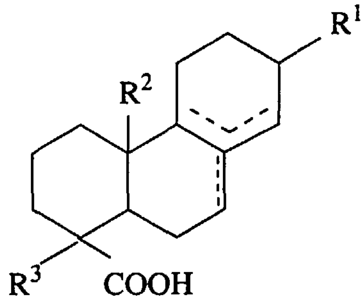

(Ib)

wherein $R^1$, $R^2$ and $R^3$ are each a hydrogen atom, an alkyl group, a cycloalkyl group or an aryl group, and may be the same or different.

In the present invention, the rosin acid is preferably dehydroabietic acid represented by the formula (Ia) wherein $R^1$ is an isopropyl group and $R^2$ and $R^3$ are each a methyl group, or dihydroabietic acid represented by the formula (Ib) wherein $R^1$, $R^2$ and $R^3$ are the same groups as mentioned above.

In the present invention, the hydrocarbon resin is preferably a hydrocarbon resin obtained by polymerizing (C-1) a styrene type monomer represented by the following formula (II) and at least one monomer selected from the group consisting of (C-2) a fraction of 4 and 5 carbon atoms produced as a by-product in petroleum refining or petroleum cracking and (C-3) an indene type monomer represented by the following formula (III), in the presence of a Friedel-Crafts catalyst;

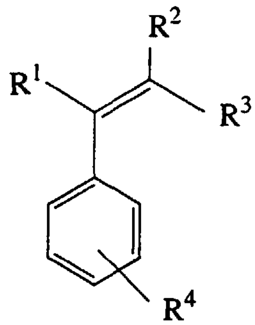

(II)

wherein $R^1$, $R^2$, $R^3$ and $R^4$ may be the same or different, and are each a hydrogen atom or an alkyl group of 4 or less carbon atoms;

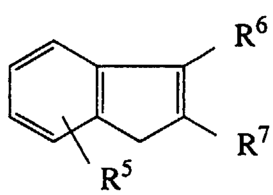

(III)

wherein $R^5$, $R^6$ and $R^7$ may be the same or different, and are each a hydrogen atom or an alkyl group of 6 or less carbon atoms.

In the present invention, the content of the styrene type monomer (C-1) in the hydrocarbon resin is preferably 30 to 99 % by mol.

The film or the sheet according to the present invention has a single-layer or multi-layer structure, and has one or more layers comprising the above-mentioned thermoplastic resin composition.

The film or the sheet (both being sometimes referred to as "film" simply hereinafter) is preferably an agricultural film or an agricultural sheet.

The thermoplastic resin composition is used for films, sheets, injection molded articles and masterbatch of anti-fogging agents or antistatic agents, which need long-term anti-fogging properties and long-term antistatic properties.

The thermoplastic resin composition according to the invention exhibits antistatic properties and anti-fogging properties immediately after it is molded and retains excellent properties over a long period of time.

## BEST MODE FOR CARRYING OUT THE INVENTION

### Detailed Description of the Invention

The thermoplastic resin composition and the film having a layer comprising the composition according to the invention are described in detail hereinafter.

The thermoplastic resin composition of the invention comprises:

(A) a thermoplastic resin,
(B) a surface active agent in an amount of 0.01 to 30 parts by weight based on 100 parts by weight of the thermoplastic resin (A), and
(C) an organic compound in an amount of 0.01 to 30 parts by weight based on 100 parts by weight of the thermoplastic resin (A), said organic compound being a functional group-containing organic compound and containing 0.1 to 10 mmol/g of a functional group having two atoms a, b bonded to each other whose atomic charges Ea, Eb, as determined by calculation of molecular orbital method, satisfy the following relation (1):

$$0.25 \leq |Ea\text{-}Eb| \leq 0.7 \qquad (1)$$

wherein Ea and Eb represent atomic charges (net charges) of the atom a and the atom b, respectively.

An important characteristic of the thermoplastic resin composition of the invention is that the component (B) and the component (C) are used in combination.

The thermoplastic resin (A), the surface active agent (B) and the functional group-containing organic compound (C) contained in the thermoplastic resin composition are described below in this order.

### (A) Thermoplastic resin

The thermoplastic resin (A) for use in the invention is, for example, a polyolefin, a polyamide, a polyester, a polyacetal, polystyrene, an acrylonitrile/butadiene/styrene copolymer (ABS), a polymethacrylate, a polycarbonate, polyphenylene oxide, polyvinyl chloride, polyvinylidene chloride, a vinyl acetate copolymer or an ethylene/(meth)acrylate copolymer. The thermoplastic resin (A) is preferably at least one thermoplastic resin selected from the group consisting of a polyolefin, polyvinyl chloride and an ethylene/vinyl acetate copolymer.

Examples of the polyolefins include olefin homopolymers, such as polyethylene, polypropylene, poly-1-butene, polymethylpentene and polymethylbutene; and olefin copolymers, such as an ethylene/$\alpha$-olefin random copolymer and a propylene/ethylene random copolymer. Of these, preferable are polyethylene, polypropylene and an ethylene/$\alpha$-olefin random copolymer.

When the polyolefin is a polyolefin obtained from an olefin of 3 or more carbon atoms, it may be an isotactic polymer or a syndiotactic polymer. Of these, polyethylene (ethylene homopolymer) or an ethylene/$\alpha$-olefin random copolymer is particularly preferable.

The ethylene homopolymer or the ethylene/$\alpha$-olefin random copolymer, that is preferably used in the invention, desirably has a density of 0.880 to 0.960 g/cm$^3$ and a melt flow rate (MFR, ASTM D 1238-65T, 190 °C, load of 2.16 kg) of 0.01 to 100 g/10 min.

The polyolefin may be prepared by a high-pressure radical polymerization process, or it may be prepared by another known process such as a medium-pressure or low-pressure polymerization process using a transition metal compound catalyst such as a Ziegler-Natta catalyst or a metallocene catalyst.

Especially when a film having a layer comprising the thermoplastic resin composition of the invention is used as an agricultural covering material, it is preferable that only an ethylene/$\alpha$-olefin copolymer having a density of 0.880 to 0.935 g/cm$^3$ and MFR of 0.1 to 20 g/10 min, which is obtained by a medium-pressure or low-pressure polymerization process, or a combination of said ethylene/$\alpha$-olefin copolymer and high-pressure low-density polyethylene having a density of

0.910 to 0.935 g/cm$^3$ and MFR of 0.1 to 20 g/10 min, which is obtained by a high-pressure radical polymerization process, is used as the thermoplastic resin contained in the thermoplastic resin composition, from the viewpoints of moldability, light transmittance, strength and weathering resistance.

Examples of the polyamides include aliphatic polyamides, such as nylon 6, nylon 66, nylon 10, nylon 12 and nylon 46; and aromatic polyamides prepared from aromatic dicarboxylic acids and aliphatic diamines. Of these, nylon 6 is preferable.

Examples of the polyesters include aromatic polyesters, such as polyethylene terephthalate, polyethylene naphthalate and polybutylene terephthalate; polycaprolactone; and polyhydroxybutyrate. Of these, polyethylene terephthalate is preferable.

Examples of the polyacetals include polyformaldehyde (polyoxymethylene), polyacetaldehyde, polypropionaldehyde and polybutylaldehyde. Of these, polyformaldehyde is preferable.

The polystyrene may be a homopolymer of styrene, or it may be a bipolymer of styrene and either acrylonitrile, methyl methacrylate and $\alpha$-methylstyrene, for example, an acrylonitrile/styrene copolymer.

The acrylonitrile/butadiene/styrene copolymer (ABS) preferably used is one comprising 20 to 35 % by mol of constituent units derived from acrylonitrile, 20 to 30 % by mol of constituent units derived from butadiene and 40 to 60 % by mol of constituent unit derived from styrene.

The polymethacrylate is preferably polymethyl methacrylate (PMMA).

Examples of the polycarbonates include those obtained from bis(4-hydroxyphenyl)methane, 1,1-bis(4-hydroxyphenyl)ethane, 2,2-bis(4-hydroxyphenyl)propane and 2,2-bis(4-hydroxyphenyl)butane. Of these, a polycarbonate obtained from 2,2-bis(4-hydroxyphenyl)propane is preferable.

The polyphenylene oxide is preferably poly(2,6-dimethyl-1,4-phenyleneoxide).

The polyvinyl chloride may be a homopolymer of vinyl chloride, or it may be a copolymer of vinyl chloride and any of vinylidene chloride, an acrylic ester, acrylonitrile and propylene.

As the polyvinylidene chloride, a copolymer containing not less than 85 % of vinylidene chloride units is usually used, and in the copolymer, units derived from vinyl chloride, acrylonitrile, a (meth)acrylic ester, an allyl ester, an unsaturated ester, styrene or the like are contained in addition to the vinylidene chloride units.

The vinyl acetate polymer may be a homopolymer of vinyl acetate, or it may be a copolymer of vinyl acetate and any of ethylene and vinyl chloride. Of these, preferable is an ethylene/vinyl acetate copolymer.

The ethylene/(meth)acrylate copolymer is preferably an ethylene/methyl acrylate copolymer, an ethylene/ethyl acrylate copolymer, an ethylene/methyl methacrylate copolymer or an ethylene/ethyl methacrylate copolymer.

The thermoplastic resins mentioned above can be used singly or in combination of two or more kinds.

(B) Surface active agent

Examples of the surface active agents include:

ionic surface active agents, such as aliphatic sulfonic acid salts, higher alcohol sulfuric ester salts, higher alcohol ethylene oxide adduct sulfuric ester salts, higher alcohol phosphoric ester salts, higher alcohol ethylene oxide adduct phosphoric ester salts, quaternary ammonium salt type cationic surface active agents and betaine type ampholytic surface active agents; and

nonionic surface active agents, such as glycerol fatty monoesters, glycerol fatty diesters, glycerol fatty triesters, diglycerol fatty esters, polyethylene glycol fatty esters, higher alcohol ethylene oxide adducts, polyhydric alcohol fatty esters, N,N-bis(2-hydroxyethyl)aliphatic amines, N,N-bis(2-hydroxyisopropyl)aliphatic amines, N,N-bis(2-hydroxyethyl)aliphatic amides and N,N-bis(2-hydroxyisopropyl)aliphatic amides.

Specifically, there can be mentioned:

aliphatic sulfonic acid salts, such as sodium lauryl sulfonate;

higher alcohol sulfuric ester salts, such as lauryl alcohol sulfuric ester sodium salt;

higher alcohol ethylene oxide adduct sulfuric ester salts, such as lauryl alcohol EO 4 mol adduct sulfuric ester sodium salt (EO = ethylene oxide);

higher alcohol phosphoric ester salts, such as octyl alcohol phosphoric ester sodium salt, lauryl alcohol phosphoric ester sodium salt, cetyl alcohol phosphoric ester sodium salt, stearyl alcohol phosphoric ester sodium salt and oleyl alcohol phosphoric ester sodium salt;

higher alcohol ethylene oxide adduct phosphoric ester salts, such as octyl alcohol EO 4 mol adduct phosphoric ester sodium salt, lauryl alcohol EO 4 mol adduct phosphoric ester sodium salt, cetyl alcohol EO 4 mol adduct phosphoric ester sodium salt, stearyl alcohol EO 4 mol adduct phosphoric ester sodium salt and oleyl alcohol EO 4 mol adduct phosphoric ester sodium salt;

quaternary ammonium salt type cationic surface active agents, such as lauryltrimethylammonium methosulfate;
betaine type ampholytic surface active agents, such as lauryldimethylbetaine;
glycerol fatty monoesters, such as glycerol monolaurate, glycerol monomyristate, glycerol monopalmitete, glycerol monostearate, glycerol monobehenate and glycerol monooleate;
glycerol fatty diesters, such as glycerol dilaurate, glycerol dimyristate, glycerol dipalminate, glycerol distearate, glycerol dibehenate and glycerol dioleate;
glycerol fatty triesters, such as glycerol trilaurate, glycerol trimyristate, glycerol tripalminate, glycerol tristearate, glycerol tribehenate and glycerol trioleate;
diglycerol fatty esters, such as diglycerol monolaurate, diglycerol monomyristate, diglycerol monopalmitete, diglycerol monostearate, diglycerol hehenate and diglycerol monooleate;
polyethylene glycol fatty esters, such as polyethylene glycol 200 monolaurate, polyethylene glycol 200 monostearate and polyethylene glycol 200 monooleate;
higher alcohol ethylene oxide adducts, such as lauryl alcohol EO 2 mol adduct, lauryl alcohol EO 4 mol adduct, lauryl alcohol EO 6 mol adduct, lauryl alcohol EO 10 mol adduct, nonylphenol EO 4 mol adduct and nonylphenol EO 10 mol adduct;
polyhydric alcohol fatty esters, such as sorbitan fatty ester, propylene glycol fatty ester, sucrose fatty ester, mono- (di- or tri-)stearyl citric ester, pentaerythritol fatty ester, trimethylolpropane fatty ester, polyoxyethylene glycerol fatty ester, polyoxyethylene sorbitan fatty ester, polyoxyethylene glycol fatty ester and polypropylene glycol fatty ester;
N,N-bis(2-hydroxyethyl)aliphatic amines, such as N,N-bis(2-hydroxyethyl)laurylamine, N,N-bis(2-hydroxyethyl)myristylamine, N,N-bis(2-hydroxyethyl)palmitylamine, N,N-bis(2-hydroxyethyl)stearylamine and N,N-bis(2-hydroxyethyl)oleylamine;
N,N-bis(2-hydroxyisopropyl)aliphatic amines, such as N,N-bis(2-hydroxyisopropyl)laurylamine, N,N-bis(2-hydroxyisopropyl)myristylamine, N,N-bis(2-hydroxyisopropyl)palmitylamine, N,N-bis(2-hydroxyisopropyl)stearylamine and N,N-bis(2-hydroxyisopropyl)oleylamine;
N,N-bis(2-hydroxyethyl)aliphatic amides, such as N,N-bis(2-hydroxyethyl)laurylamide, N,N-bis(2-hydroxyethyl)myristylamide, N,N-bis(2-hydroxyethyl)palmitylamide, N,N-bis(2-hydroxyethyl)stearylamide, N,N-bis(2-hydroxyethyl)behenylamide and N,N-bis(2-hydroxyethyl)oleylamide; and
N,N-bis(2-hydroxyisopropyl)aliphatic amides, such as N,N-bis(2-hydroxyisopropyl)laurylamide, N,N-bis(2-hydroxyisopropyl)myristylamide, N,N-bis(2-hydroxyisopropyl)palmitylamide, N,N-bis(2-hydroxyisopropyl)stearylamide and N,N-bis(2-hydroxyisopropyl)oleylamide.

Also available are mono- or diesters of the N,N-bis(2-hydroxyethyl)aliphatic amines and fatty acids such as lauric acid and stearic acid.

Further, mineral oils, lauryl alcohol, diethylene glycol monolaurate, polyoxyethylene glycol fatty acid alcohol ether, polyoxyethylene alkylphenyl ether, polyoxypropylene-polyoxyethylene block polymer, polyethylene glycol and polypropylene glycol are also available.

Of these, at least one compound selected from the glycerol fatty esters, glycerol fatty diesters, glycerol fatty triesters, polyethylene glycol fatty esters, higher alcohol ethylene oxide adducts, N,N-bis(2-hydroxyethyl)aliphatic amines, N,N-bis(2-hydroxyisopropyl)aliphatic amines, N,N-bis(2-hydroxyethyl)aliphatic amides and N,N-bis(2-hydroxyisopropyl)aliphatic amides is preferably used from the viewpoints of performances and costs.

The surface active agents function as antistatic agents and anti-fogging agents having excellent immediate effects, and they may be used singly or in combination of two or more kinds.

<u>(C) Functional group-containing organic compound</u>

The functional group-containing organic compound (C) for use in the invention is a compound containing 0.1 to 10 mmol/g, preferably 0.15 to 8.0 mmol, of a functional group having two atoms a, b bonded to each other whose atomic charges Ea, Eb, as determined by calculation of molecular orbital method, satisfy the following relation (1), preferably the following relation (2);

$$0.25 \leq |Ea\text{-}Eb| \leq 0.7 \qquad (1)$$

$$0.4 \leq |Ea\text{-}Eb| \leq 0.7 \qquad (2)$$

wherein Ea and Eb represent atomic charges of the atom a and the atom b, respectively.

The functional group-containing organic compound (C) plays a role of a migration controlling agent to control migration of the surface active agent to the surface of the composition.

It is preferable that |Ea-Eb| is within the range defined by the relation (1), particularly within the range defined by

the relation (2), because migration of the surface active agent is moderately controlled.

In the calculation of molecular orbital method, the atomic charge was calculated in accordance with the AMI method using a molecular orbital method calculation soft MOPAC93 (available from Fujitsu Hanbai K.K.). The unit of the atomic charge is "electron (e)" (e = 1.602 $\times$ $10^{-19}$ coulomb). In case of the functional group connected to the polymer (i.e., incorporated into and bonded to the polymer), the atomic charge is calculated by regarding, as a methyl group, a carbon atom of the polymer chain, to which the functional group is connected. For example, in case of a hydrocarbon resin obtained by copolymerizing a styrene type monomer, a C4 - C5 fraction and an indene type monomer, calculation of the atomic charge is made by regarding, as a methyl group, a carbon atom of the polymer chain, to which an aromatic group (benzene ring or the like) derived from the styrene type monomer is connected.

The content (mmol/g) of the functional group in the functional group-containing organic compound is measured by elementary analysis using a conventional elementary analyzer according to the type of the functional group.

Examples of the functional groups satisfying the above relation (1) include a carboxyl group, a carbonyl group, a hydroxyl group, an aromatic group, an amino group, a sulfone group and an ester group. In the invention, at least one of these groups is contained in the functional group-containing compound.

Examples of the functional groups satisfying the above relation (2) include a carboxyl group (including a carboxylic anhydride group), a carbonyl group, a hydroxyl group, an amino group, a sulfone group (including a sulfo group) and an ester group. In the invention, at least one of these groups is contained in the functional group-containing compound.

Examples of the functional group-containing organic compounds having an ester group include rosin esters.

Examples of the functional group-containing organic compounds having a carboxyl group include modified polyolefins obtained by modifying polyolefins with unsaturated carboxylic acids or their derivatives (e.g., carboxylic anhydrides) and oxidized polyolefins obtained by oxidizing polyolefins by air.

Examples of the functional group-containing organic compounds having a carbonyl group include oxidized polyolefins obtained by oxidizing polyolefins by air.

Examples of the functional group-containing organic compounds having a hydroxyl group include modified polyolefins obtained by graft copolymerizing polyolefins with ethylenically unsaturated monomers having a hydroxyl group and oxidized polyolefins obtained by oxidizing polyolefins by air.

Examples of the functional group-containing organic compounds having an aromatic group include petroleum resins.

Examples of the functional group-containing organic compounds having an amino group include modified polyolefins obtained by graft copolymerizing polyolefins with ethylenically unsaturated monomers having an amino group.

Examples of the functional group-containing organic compounds having a sulfone group include modified polyolefins obtained by graft copolymerizing polyolefins with ethylenically unsaturated monomers having a sulfone group.

The functional group-containing organic compound (C) has a weight-average molecular weight of usually less than 60,000, preferably not more than 50,000, more preferably 100 to 30,000.

In the present invention, it is desired that the thermoplastic resin (A), the surface active agent (B) and the below-described rosin ester (C-i) as the functional group-containing organic compound (C) are used in combination, or it is desired that the thermoplastic resin (A), the surface active agent (B) and at least one compound selected from the group consisting of the below-described hydrocarbon resin (C-ii), modified polyolefin (C-iii), oxidized polyolefin (C-iv) and natural wax (C-v), as the functional group-containing organic compound (C), are used in combination.

<u>(C-i) Rosin ester</u>

Examples of the functional group-containing organic compounds having an ester group include rosin esters, namely, esters of resin acids contained in rosin (sometimes referred to as "rosin acids), and esters of derivatives of the resin acids.

Examples of the rosin acids (rosin type resin acids, resin acids contained in rosin) and their derivatives used for preparing the rosin esters include dehydroabietic acid, dihydroabietic acid, dihydropimaric acid, abietic acid, pimaric acid, abietic anhydride, sandaracopimaric acid, palustric acid, isopimaric acid, neoabietic acid, tetrahydroabietic acid and derivatives of these acids. Of these, preferable are dehydroabietic acid, dihydroabietic acid, dihydropimaric acid and derivatives of these acids.

In case of the functional group-containing organic compound having two or more kinds of the above functional groups, such as dehydroabietic ester having both an ester group and an aromatic group, the representative of the functional groups is a group having |Ea-Eb| of the largest value, for example, an ester group in case of the dehydroabietic ester.

In the present invention, the rosin acid used for preparing the rosin ester is preferably at least one rosin acid selected from a rosin acid represented by the following formula (Ia) (compound (Ia)) and a rosin acid represented by the following formula (Ib) (compound (Ib)):

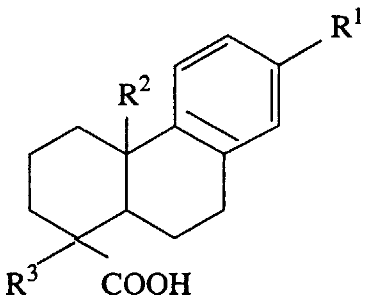

(Ia)

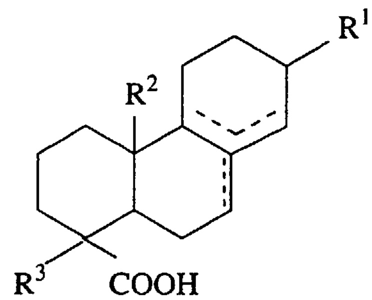

(Ib)

wherein $R^1$, $R^2$ and $R^3$ may be the same or different, and are each a hydrogen atom, an alkyl group, a cycloalkyl group or an aryl group.

Examples of the alkyl groups include alkyl groups of 1 to 8 carbon atoms which may have a branch, such as methyl, ethyl, n-propyl, i-propyl, n-butyl, i-butyl, tert-butyl, pentyl, heptyl and octyl. These groups may have substituents, such as a hydroxyl group, a carboxyl group, an alkoxy group and halogen.

Examples of the cycloalkyl groups include cycloalkyl groups of 5 to 8 carbon atoms, such as cyclopentyl, cyclohexyl and cycloheptyl. These groups may have substituents, such as a hydroxyl group, a carboxyl group, an alkoxy group and halogen.

Examples of the aryl groups include aryl groups of 6 to 10 carbon atoms, such as phenyl, tolyl, naphthyl. These groups may have substituents, such as a hydroxyl group, a carboxyl group, an alkoxy group and halogen.

Of the compounds (Ia), preferable is a rosin acid wherein $R^1$, $R^2$ and $R^3$ are alkyl groups which are the same or different, and more preferable is dehydroabietic acid wherein $R^1$ is i-propyl and $R^2$ and $R^3$ are each methyl.

Of the compounds (Ib), preferable is a rosin acid wherein $R^1$, $R^2$ and $R^3$ are alkyl groups which are the same or different, and more preferable is dihydroabietic acid wherein $R^1$ is i-propyl and $R^2$ and $R^3$ are each methyl.

Of the compounds (Ia) and the compounds (Ib), for example, the rosin acid represented by the formula (Ia) can be obtained by disproportionating or dehydrogenating natural rosin, such as gum rosin, tall oil rosin or wood rosin, and then purifying. The natural rosin generally contains plural kinds of resin acids, such as pimaric acid, sandaracopimaric acid, palustric acid, isopimaric acid, abietic acid, dehydroabietic acid, neoabietic acid, dihydropimaric acid, dihydroabietic acid and tetrahydroabietic acid.

Examples of the alcohols to form esters together with the rosin acids include monohydric alcohols, such as methanol, ethanol, butanol, propyl alcohol, lauryl alcohol, myristyl alcohol, cetyl alcohol, stearyl alcohol and oleyl alcohol; and polyhydric alcohols, such as ethylene glycol, propylene glycol and pentaerythritol.

The ester of the compound (Ia) and the monohydric alcohol is preferably an ester of the compound (Ia) and monohydric alcohol of 1 to 3 carbon atoms. Examples of such esters include lower alcohol esters, such as methyl dehydroabietate and ethyl dehydroabietate; and higher alcohol esters, such as lauryl dehydroabietate, myristyl dehydroabietate, stearyl dehydroabietate and oleyl dehydroabietate.

Examples of the esters of the compounds (Ia) and the polyhydric alcohols include ethylene glycol dehydroabietic monoester, ethylene glycol dehydroabietic diester, propylene glycol dehydroabietic monoester, propylene glycol dehydroabietic diester, glycol dehydroabietic monoester, glycol dehydroabietic diester, glycerol dehydroabietic triester, pentaerythritol dehydroabietic monoester, pentaerythritol dehydroabietic diester, pentaerythritol dehydroabietic triester and pentaerythritol dehydroabietic tetraester.

The ester of the compound (Ib) and the monohydric alcohol is preferably an ester of the compound (Ib) and monohydric alcohol of 1 to 30 carbon atoms. Examples of such esters include lower alcohol esters, such as methyl dihydroabietate and ethyl dihydroabietate; and higher alcohol esters, such as lauryl dihydroabietate, myristyl dihydroabietate, stearyl dihydroabietate and oleyl dihydroabietate.

Examples of the esters of the compounds (Ib) and the polyhydric alcohols include ethylene glycol dihydroabietic monoester, ethylene glycol dihydroabietic diester, propylene glycol dihydroabietic monoester, propylene glycol dihydroabietic diester, glycol dihydroabietic monoester, glycol dihydroabietic diester, glycerol dihydroabietic triester, pentaerythritol dihydroabietic monoester, pentaerythritol dihydroabietic diester, pentaerythritol dihydroabietic triester and pentaerythritol dihydroabietic tetraester.

The rosin esters mentioned above can be used singly or in combination of two or more kinds. The thermoplastic resin composition containing the rosin ester exhibits antistatic properties and anti-fogging properties over a long period of time.

(C-ii) Hydrocarbon resin

The hydrocarbon resin is obtained by polymerizing (C-1) a styrene type monomer represented by the following formula (II) and at least one monomer selected from (C-2) a fraction of 4 and 5 carbon atoms produced as a by-product in petroleum refining or petroleum cracking and (C-3) an indene type monomer represented by the following formula (III), in the presence of a Friedel-Crafts catalyst. The hydrocarbon resin may be any of a bipolymer, a terpolymer and a tetramer, which are obtained by copolymerizing the styrene type monomer represented by the following formula (II) with the fraction of 4 and 5 carbon atoms and/or the indene type monomer represented by the following formula (III).

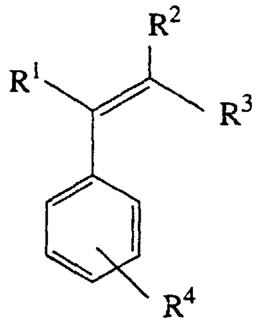

(II)

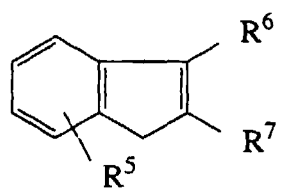

(III)

In the formula (II) representing the styrene type monomer, $R^1$, $R^2$, $R^3$ and $R^4$ may be the same or different, and are each a hydrogen atom or an alkyl group of 4 or less carbon atoms which may have a branch. Examples of the alkyl groups of 4 or less carbon atoms include methyl, ethyl, propyl and butyl.

Examples of the styrene type monomers represented by the formula (II) include styrene, vinyltoluene, α-methylstyrene and isopropenyltoluene. These monomers may be used singly or in combination of two or more kinds.

Of the styrene type monomers, styrene, vinyltoluene, α-methylstyrene and isopropenylstyrene are preferably used from the viewpoints of ease of availability and costs.

As the fraction of 4 and 5 carbon atoms, there can be used any fraction optionally selected from fractions produced as by-products in petroleum refining or cracking and containing unsaturated hydrocarbons of 4 and 5 carbon atoms.

The fractrion produced as a by-product in petroleum refining or cracking and containing unsaturated hydrocarbons of 4 and 5 carbon atoms (said fraction being referred to as "C4, C5 fraction" hereinafter) has a boiling point of usually -15 to +45 °C at normal pressure, and contains polymerizable monomers such as 1-butene, isobutene, 2-butene, 1,3-butadiene, 1-pentene, 2-methyl-1-butene, 3-methyl-1-butene, 2-pentene, isoprene, 1,3-pentadiene and cyclopentadiene. In the invention, any polymerizable monomer-containing fraction optionally selected from C4 fraction and C5 fraction can be employed. That is, not only the C4, C5 fraction but also a C4 fraction, a C4 fraction from which butadiene has been removed, a C5 fraction, a C5 fraction from which isoprene has been removed and a C5 fraction from which cyclopentadiene has been removed can be employed.

In the formula (III) representing the indene type monomer, $R^5$, $R^6$ and $R^7$ may be the same or different, and are each a hydrogen atom or an alkyl group of 6 or less carbon atoms which may have a branch. Examples of the alkyl groups of 6 or less carbon atoms include methyl, ethyl, propyl, butyl, pentyl and hexyl.

Examples of the indene type monomers include indene, methylindene and ethylindene. These monomers can be used singly or in combination of two or more kinds.

Of the indene type monomers, indene is preferably used from the viewpoints of ease of availability and costs.

The content of the styrene type monomer represented by the formula (II) in the hydrocarbon resin is in the range of 30 to 99 % by mol, preferably 45 to 99 % by mol, whereby the hydrocarbon resin shows good compatibility with the thermoplastic resin (A), and a composition having excellent retention of antistatic properties and anti-fogging properties can be obtained.

The content of each monomer in the hydrocarbon resin can be measured by quantitatively determining the monomer remaining in the solution after the reaction by means of gas chromatography.

The hydrocarbon resin can be prepared by copolymerizing the styrene type monomer, the C4, C5 fraction and the indene type monomer in the presence of a catalyst.

The catalyst employable for the polymerization is one generally known as a Friedel-Crafts catalyst, and examples thereof include various complexes of aluminum chloride, aluminum bromide, dichloromonoethylaluminum, titanium tetrachloride, tin tetrachloride and boron trifluoride.

The catalyst is used in an amount of preferably 0.01 to 5.0 % by weight, more preferably 0.05 to 3.0 % by weight, based on the total amount of all monomers.

It is preferable that the polymerization reaction is carried out in at least one hydrocarbon solvent selected from aromatic hydrocarbons, aliphatic hydrocarbons and alicyclic hydrocarbons, because reaction heat is removed and viscosity increase of the reaction mixture is inhibited. Preferred examples of the hydrocarbon solvents include aromatic hydrocarbons, such as toluene, xylene, ethylbenzene, mesitylene, cumene and cymene; mixtures of the aromatic hydrocarbons; and mixtures of the aromatic hydrocarbons with aliphatic hydrocarbons (e.g., pentane, hexane, heptane and octane) and/or alicyclic hydrocarbons (e.g., cyclopentane, cyclohexane and methylcyclohexane). In the polymerization, it is preferable that the amount of the hydrocarbon solvent is adjusted so that the initial concentration of the monomers in the reaction mixture becomes 10 to 70 % by weight.

The polymerization temperature varies depending upon the type of the monomer used, the type of the catalyst used and the amounts thereof, but the polymerization is preferably conducted at a temperature of usually -30 to +50 °C.

The polymerization time is usually about 0.5 to 5 hours, and in general, the polymerization is completed in 1 to 2 hours in almost all cases.

The polymerization can be carried out by any of batchwise and continuous processes. Further, the polymerization can be carried out in plural stages.

The weight-average molecular weight (Mw) of the hydrocarbon resin for use in the invention is in the range of preferably 300 to 5,000, more preferably 500 to 3,000, whereby the hydrocarbon resin shows good compatibility with the thermoplastic resin (A), and a composition having excellent retention of antistatic properties and anti-fogging properties can be obtained.

The hydrocarbon resins can be used singly or in combination of two or more kinds.

(C-iii) Modified polyolefin

The modified polyolefin is one obtained by graft copolymerizing a polyolefin with at least one monomer selected from an unsaturated carboxylic acid, its derivative and an ethylenically unsaturated monomer having at least one of a hydroxyl group, an amino group and a sulfone group.

Examples of the unsaturated carboxylic acids and their derivatives employable herein include unsaturated carboxylic acids, such as acrylic acid, methacrylic acid, maleic acid, fumaric acid, tetrahydrophthalic acid, itaconic acid, citraconic acid, crotonic acid, isocrotonic acid, norbonenedicarboxylic acid and bicyclo[2,2,1]hept-2-ene-5,6-dicarboxylic acid; and derivatives of these acids, such as anhydrides, halides, amides, imides and esters of these acids.

Particular examples of the derivatives include malenyl chloride, malenylimide, maleic anhydride, itaconic anhydride, citraconic anhydride, tatrahydrophthalic anhydride, bicyclo[2,2,1]hept-2-ene-5,6-dicarboxylic anhydride, dimethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, aminoethyl methacrylate and aminopropyl methacrylate.

Of these, (meth)acrylic acid, maleic anhydride, hydroxyethyl (meth)acrylate, glycidyl (meth)acrylate and aminopropyl methacrylate are preferably used.

As the modified polyolefin, a modified polyolefin having graft modification degree of 0.1 to 20 % by weight, preferably 0.5 to 10 % by weight, is preferable, because it shows excellent affinity for the antistatic agent or the surface active agent.

The term "graft modification degree" used herein means a weight ratio of a monomer graft-copolymerized to a polymer resulting from graft copolymerization. For example, if 1 g of a monomer graft-copolymerized is present in 100 g of a graft polymer, it can be said that the polymer has graft modification degree of 1 % by weight.

The modified polyolefin desirably has an intrinsic viscosity [$\eta$], as measured in a decalin solvent at 135 °C, of 0.01 to 3 dl/g, preferably 0.02 to 1.8 dl/g, more preferably 0.05 to 0.3 dl/g, whereby a thermoplastic resin composition having stable antistatic properties and anti-fogging properties for a long period of time can be obtained.

The weight-average molecular weight (Mw) of the modified polyolefin is usually less than 60,000, preferably not more than 50,000, more preferably 100 to 30,000.

The modified polyolefin can be prepared by such a known process as disclosed in Japanese Patent Publication No. 22988/1977.

For example, the modified polyolefin can be prepared by a process comprising the steps of heating a polyolefin at a temperature of not lower than the softening point to melt it and then dropwise adding the unsaturated carboxylic acid and peroxide simultaneously or successively to the molten polyolefin with stirring to perform graft copolymerization.

In the composition of the invention, the modified polyolefins can be used singly or in combination of two or more kinds.

(C-iv) Oxidized polyolefin

The oxidized polyolefin for use in the invention is one obtained by oxidizing a polyolefin by an oxygen-containing gas.

The polyolefin for preparing the oxidized polyolefin is a homopolymer of one $\alpha$-olefin of 2 to 12 carbon atoms or a copolymer of two or more $\alpha$-olefins of 2 to 12 carbon atoms.

The $\alpha$-olefin of 2 to 12 carbon atom may be any of chain and branched $\alpha$-olefins, and examples thereof include ethylene, propylene, 1-butene, 1-pentene, 2-methyl-1-butene, 3-methyl-1-butene, 3,3-dimethyl-1-butene, 1-heptene, methyl-1-hexene, dimethyl-1-pentene, trimethyl-1-butene, ethyl-1-pentene, 1-octene, methyl-1-pentene, dimethyl-1-hexene, trimethyl-1-pentene, ethyl-1-hexene, methylethyl-1-pentene, diethyl-1-butene, propyl-1-pentene, 1-decene, methyl-1-nonene, dimethyl-1-octene, trimethyl-1-heptene, ethyl-1-octene, methylethyl-1-heptene, diethyl-1-hexene, 1-dodecene and 1-hexadodecene.

As the polyolefin, preferable is a polyolefin having an intrinsic viscosity [$\eta$], as measured in a decalin solvent at 135 °C, of 0.01 to 3 dl/g, particularly 0.02 to 1.8 dl/g.

The polyolefin can be prepared by a conventional process such as a high-pressure radical polymerization process or a medium-pressure or low-pressure polymerization process that is conducted in the presence of various transition metal compound catalysts such as a Ziegler catalyst and a metallocene catalyst.

In the preparation of the oxidized polyolefin, the polyolefin is oxidized by, for example, bringing a molten polyolefin into contact with an oxygen-containing gas as disclosed in Japanese Patent Publication No. 37991/1973. More specifically, the polyolefin is heated in an autoclave at a temperature of not lower than the softening point to melt it, and in the molten polyolefin, bubbling of an oxygen-containing gas is conducted with stirring.

As the oxygen-containing gas used for oxidizing the polyolefin, pure oxygen, air or the like is appropriately selected.

The oxidized polyolefin for use in the invention desirably has an acid value of 0.1 to 100 mgKOH/g, particularly 0.5 to 80 mgKOH/g, whereby the oxidized polyolefin shows good affinity for the antistatic agent or the surface active agent, and a composition having excellent retention of antistatic properties and anti-fogging properties can be obtained.

The polyolefin for use in the invention has an intrinsic viscosity [$\eta$], as measured in a decalin solvent at 135 °C, of 0.01 to 3 dl/g, preferably 0.02 to 1.8 dl/g, more preferably 0.05 to 0.5 dl/g.

The oxidized polyolefins can be used singly or in combination of two or more kinds.

(C-v) Natural wax

The natural wax for use in the invention is, for example, a vegetable wax, an animal wax or a mineral wax. Further, any of esters of higher fatty acids and higher alcohols and their derivatives can be used without specific limitation, as far as they are solid at ordinary temperature.

Examples of the vegetable waxes include candelilla wax, carnauba wax, rice wax, Japan wax and jojoba oil. Examples of the animal waxes include bees wax, lanolin (wool wax) and whale wax. Examples of the mineral waxes include montan wax.

These natural waxes may be those wholly saponified or partially saponified, and they can be used singly or in combination of two or more kinds.

The natural wax has an weight-average molecular weight of usually less than 60,000, preferably not more than 50,000, more preferably 100 to 30,000.

Of the functional group-containing organic compounds (C), the rosin esters (C-i) and the modified polyolefins (C-iii) have excellent effect of imparting long-term anti-fogging properties. Of the modified polyolefins, a modified polyolefin obtained by graft modifying a polyolefin with unsaturated carboxylic anhydride exerts most highly effect.

The thermoplastic resin composition, that is a blend of the components (A), (B) and (C) in a specific blending ratio, is used for films, sheets, injection molded articles and masterbatch of anti-fogging agents or antistatic agents, and the composition exhibits antistatic properties and anti-fogging properties immediately after it is molded and retains excellent properties over a long period of time.

The thermoplastic resin composition of the invention can be prepared by melt kneading the components (A), (B) and (C) and if desired the below-described arbitrary ingredients using an extruder or a kneader generally known, and the composition is subjected to a known molding method such as injection molding, extrusion molding or stretch molding to produce various molded products such as injection molded products, extrusion molded products and stretch

molded products.

In the thermoplastic resin composition of the invention, compatibility improvers, such as higher fatty acid metallic salts, polyolefin waxes and other antistatic agents than the above-mentioned ones, may be contained if necessary. Further, other various additives, such as heat stabilizer, weathering stabilizer, hindered amine stabilizer, nucleating agent (excluding the above-mentioned rosin ester (C-i)), metal deactivator, lubricant, anti-blocking agent, slip agent, heat retaining agent, anti-fogging agent, release agent, inorganic filler, pigment dispersant, pigment, dye and crosslinking agent, may be contained in amounts not detrimental to the objects of the invention.

These various additives are described below.

Heat stabilizer

Examples of the heat stabilizers employable in the invention include a phenol type stabilizer, a phosphorus type stabilizer and a sulfur type stabilizer.

Phenol type stabilizer

As the phenol type stabilizers, those having been hitherto used as stabilizers are employable without specific limitation. Examples of the phenol type stabilizers include 2,6-di-t-butyl-4-methylphenol, 2,6-di-t-butyl-4-ethylphenol, 2,6-dicyclohexyl-4-methylphenol, 2,6-di-t-amyl-4-methylphenol, 2,6-di-t-octyl-4-n-propylphenol, 2,6-dicyclohexyl-4-n-octylphenol, 2-isopropyl-4-methyl-6-t-butylphenol, 2-t-butyl-2-ethyl-6-t-octylphenol, 2-isobutyl-4-ethyl-6-t-hexylphenol, 2-cyclohexyl-4-n-butyl-6-isoproylphenol, dl-α-tocophenol, t-butylhydroquinone, 2,2'-methylenebis(4-methyl-6-t-butylphenol), 4,4'-butylidenebis(3-methyl-6-t-butylphenol), 4,4'-thiobis(3-methyl-6-t-butylphenol), 2,2-thiobis(4-methyl-6-t-butylphenol), 4,4'-methylenebis(2-6-di-t-butylphenol), 2,2'-methylenebis[6-(1-methylcyclohexyl)-p-cresol], 2,2'-ethylidenebis(4,6-di-t-butylphenol), 2,2'-butylidenebis(2-t-butyl-4-methylphenol), 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,1,3-tris(2-methyl-4-hydroxy-5-t-butylphenyl)butane, triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,2-thiodiethylenebis[3-(3,5-di-t-butyl-4-hydroxyphenyl)propionate], N,N'-hexamethylenebis(3,5-di-t-butyl-4-hydroxyhydrocinnamide), 3,5-di-t-butyl-4-hydroxybenzyl phosphonate diethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethy]isocyanurate, tris(4-t-butyl-2,6-dimethyl-3-hydroxybenzyl)isocyanurate, 2,4-bis(n-octylthio)-6-(4-hydroxy-3,5-di-t-butylanilino)-1,3,5-triazine, tetrakis[methylene-3-(3,5-di-t-butyl-4-hydroxyphenyl)propionate]methane, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methylphenyl)propionyloxy}ethyl]-2,4,8,10-tetraoxaspiro[5,5]undecane, 2,2-bis[4-(2-(3,5-di-t-butyl-4-hydroxyhydrocinnamoyloxy))ethoxyphenyl]propane and stearyl β-(3,5-di-t-butyl-4-hydroxyphenyl)propionate.

Of these, preferable are stearyl β-(3,5-di-t-butyl-4-hydroxyphenyl)propionate, tetrakis[methylene-3-(3,5-di-t-butyl-4-hydroxyphenyl)propionate]methane, tris(3,5-di-t-butyl-4-hydroxybenzyl)isocyanurate, 1,3,5-trimethyl-2,4,6-tris(3,5-di-t-butyl-4-hydroxybenzyl)benzene, dl-α-tocophenol, tris(2,6-dimethyl-3-hydroxy-4-t-butylbenzyl)isocyanurate, tris[(3,5-di-t-butyl-4-hydroxyphenyl)propionyloxyethyl]isocyanurate and 3,9-bis[1,1-dimethyl-2-{β-(3-t-butyl-4-hydroxy-5-methylphenyl)propionyloxy}ethyl]-2,4,8,10-tetraoxaspiro[5,5]undecane.

Also employable as the phenol type stabilizers are commercially available ones, for example, "Irganox 1010" (trade name, available from Ciba-Geigy Corporation), "Irganox 1076" (trade name, available from Ciba-Geigy Corporation), "Irganox 1330" (trade name, available from Ciba-Geigy Corporation), "Irganox 3114" (trade name, available from Ciba-Geigy Corporation), "Irganox 3125" (trade name, available from Ciba-Geigy Corporation), "BHT" (trade name, available from Takeda Chemical Industries, Ltd.), "Cyanox 1790" (trade name, available from Cyanamide Co.), "Sumilizer GA-80" (trade name, available from Sumitomo Chemical Co., Ltd.) and "Vitamin E" (trade name, available from Eisai Co., Ltd.).

These phenol type stabilizers can be used singly or in combination of two or more kinds.

It is desired that the phenol type stabilizer is used in an amount of 0.005 to 2 parts by weight, preferably 0.01 to 1 part by weight, more preferably 0.05 to 0.5 part by weight, based on 100 parts by weight of the thermoplastic resin.

When the amount of the phenol type stabilizer is in the above range per 100 parts by weight of the thermoplastic resin, stability of heat resistance or aging resistance of the resulting composition can be highly improved, costs of the stabilizer can be made low, and lowering of properties of the thermoplastic resin such as tensile strength does not take place.

Phosphorus type stabilizer

As the phosphorus type stabilizers, those having been hitherto used as stabilizers are employable without specific limitation. Examples of the phosphorus type stabilizers include trioctyl phosphite, trilauryl phosphite, tridecyl phosphite,

octyldiphenyl phosphite, tris(2,4-di-t-butylphenyl)phosphite, triphenyl phosphite, tris(butoxyethyl)phosphite, tris(nonylphenyl)phosphite, distearyl pentaerythritol diphosphite, tetra(tridecyl)-1,1,3-tris(2-methyl-5-t-butyl-4-hydroxyphenyl)butane diphosphite, tetra(C12 to C15 mixed alkyl)-4,4'-isopropylidenediphenyl diphosphite, tetra(tridecyl)4,4'-butylidenebis(3-methyl-6-t-butylphenol)diphosphite, tris(3,5-di-t-butyl-4-hydroxyphenyl)phosphite, tris(monononylphenyl and dinonylphenyl mixed)phosphite, hydrogenated 4,4'-isopropylidenediphenol polyphosphite, bis(octylphenyl) • bis[4,4'-butylidenebis(3-methyl-6-t-butylphenol)] • 1,6-hexanediol diphosphite, phenyl • 4,4'-isopropylidenediphenol • pentaerythritol diphosphite, tris[4,4'-isopropylidenebis(2-t-butylphenol)]phosphite, phenyldiisodecyl phosphite, di(nonylphenyl)pentaerythritol diphosphite, tris(1,3-distearoyloxyisopropyl)phosphite, 4,4'-isopropylidenebis(2-t-butylphenol) • di(nonylphenyl)phosphite, 9,10-dihydro-9-oxa-9-oxa-10-phosphaphenanthrene-10-oxide, bis(2,4-di-t-butyl-6-methylphenyl) • ethylphosphite and 2-[{2,4,8,10-tetrakis(1,1-dimethylethyl)dibenzo(D,F)(1,3,2)-dioxaphosphephine-6-yl}oxy]-N,N-bis[2-[{2,4,8,10-tetrakis(1,1-dimethylethyl)dibenzo(D,F)(1,3,2)-dioxaphosphephine-6-yl}oxy]ethyl]ethaneamine.

As the bis(dialkylphenyl)pentaerythritol diphosphite esters, those of spiro type represented by the following formula (IIIa) and those of cage type represented by the following formula (IVa) are employable. In general, mixtures of both isomers are most frequently used for the economical reason resulting from the process for preparing the phosphite esters.

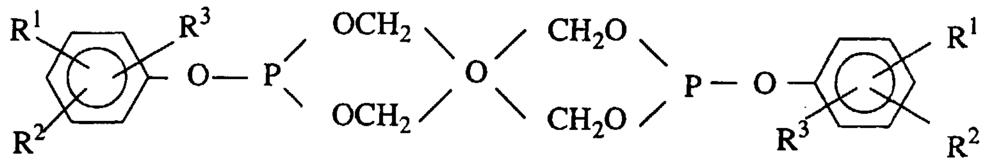

(IIIa)

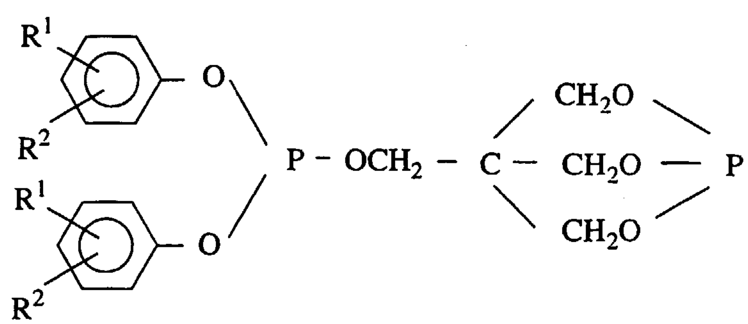

(IVa)

In the formulas (IIIa) and (IVa), $R^1$, $R^2$ and $R^3$ may be the same or different, and are each hydrogen or an alkyl group of 1 to 9 carbon atoms which may have a branch. Of these, a branched alkyl group is preferable and tert-butyl is more preferable as each of $R^1$, $R^2$ and $R^3$. The substitution positions of $R^1$, $R^2$ and $R^3$ in the phenyl group of the formulas (IIIa) and (IVa) are most preferably 2-position, 4-position and 6-position, respectively. Preferred examples of the phosphite esters include bis(2,4-di-t-butylphenyl)pentaerythritol diphosphite and bis(2,6-di-t-butyl-4-methylphenyl)pentaerythritol diphosphite. Also preferable are phosphonites having a structure wherein carbon and phosphorus are directly bonded, for example, tetrakis(2,4-di-t-butylphenyl)-4,4'-biphenylene diphosphonite.

Also employable as the phosphorus type stabilizers are commercially available ones, for example, "Irgafos 168" (trade name, available from Ciba-Geigy Corporation), "Irgafos 12" (trade name, available from Ciba-Geigy Corporation), "Irgafos 38" (trade name, available from Ciba-Geigy Corporation), "Mark 329K" (trade name, available from Asahi Denka K.K.), "Mark PEP36" (trade name, available from Asahi Denka K.K.), "Mark PEP-8" (trade name, available from Asahi Denka K.K.), "Sandstab P-EPQ" (trade name, available from Clariant Co.), Weston 618 (trade name, available from GE Co.), "Weston 619G" (trade name, available from GE Co.) and "Weston-624" (trade name, available from GE Co.).

These phosphorus type stabilizers can be used singly or in combination of two or more kinds.

It is desired that the phosphorus type stabilizer is used in an amount of 0.005 to 2 parts by weight, preferably 0.01

to 1 part by weight, more preferably 0.05 to 0.5 part by weight, based on 100 parts by weight of the thermoplastic resin.

When the amount of the phosphorus type stabilizer is in the above range per 100 parts by weight of the thermoplastic resin, stability of heat resistance or aging resistance of the resulting composition can be highly improved, costs of the stabilizer can be made low, and lowering of properties of the thermoplastic resin such as tensile strength does not take place.

Sulfur type stabilizer

As the sulfur type stabilizers, those having been hitherto used as stabilizers are employable without specific limitation.

Examples of the sulfur type stabilizers include:

dialkyl thiodipropionates, such as dilauryl thiodipropionate, dimyristyl thiodipropionate and distearyl thiodipropionate; and

polyhydric alcohol esters of alkylthiopropionic acids, such as pentaerythritol tetralauryl thiopropionate, dilauryl thiodipropionate, dimyristyl thiodipropionate, distearyl thiodipropionate, laurylstearyl thiodipropionate and distearyl thiodibutyrate.

Examples of the alkylthiopropionic acids used for preparing the polyhydric alcohol esters of alkylthiopropionic acids include butylthiopropionic acid, octylthiopropionic acid, laurylthiopropionic acid and stearylthiopropionic acid.

Examples of the polyhydric alcohols include glycerol, trimethylolethane, trimethylolpropane, pentaerythritol and trishydroxyethyl isocyanurate.

Also employable as the sulfur stabilizers are commercially available ones, for example, "DSTP (Yoshitomi)" (trade name, available from Yoshitomi Seiyaku K.K.), "DLTP (Yoshitomi)" (trade name, available from Yoshitomi Seiyaku K.K.), "DLTOIB" (trade name, available from Yoshitomi Seiyaku K.K.), "DMTP" (Yoshitomi) (trade name, available from Yoshitomi Seiyaku K.K.), "Seenox 412S" (trade name, available from Shiraishi Calcium K.K.) and "Cyanox 1212" (trade name, available from Cyanamide Co.). These sulfur type stabilizers can be used singly or in combination of two or more kinds.

It is desired that the sulfur type stabilizer is used in an amount of 0.005 to 2 parts by weight, preferably 0.01 to 1 part by weight, more preferably 0.05 to 0.5 part by weight, based on 100 parts by weight of the thermoplastic resin.

When the amount of the sulfur type stabilizer is in the above range per 100 parts by weight of the thermoplastic resin, stability of heat resistance or aging resistance of the resulting composition can be highly improved, costs of the stabilizer can be made low, and lowering of properties of the thermoplastic resin such as tensile strength does not take place.

Weathering stabilizer

As the weathering stabilizers, compounds having been hitherto used to improve weathering resistance are employable without specific limitation. For example, known weathering stabilizers (ultraviolet light absorbers) and light stabilizers can be employed.

When the later-described film having a layer comprising the thermoplastic resin composition of the invention is used as an agricultural film, the light stabilizers are more effective and greatly contribute to improvement in the weathering stability.

Examples of the weathering stabilizers (ultraviolet light absorbers) include:

2,4-dihydroxybenzophenone,
2-hydroxy-5-chlorobenzophenone,
2-(2'-hydroxy-5'-methylphenyl)benzotriazole,
2-hydroxy-4-methoxybenzophenone,
2,2'-dihydroxy-4-methoxybenzophenone,
2,2',4,4'-tetrahydroxybenzophenone,
2-hydroxy-4-methoxy-4'-chlorobenzophenone,
p-tert-butylphenyl salicylate,
2,2'-dihydroxy-4,4'-dimethoxybenzophenone,
ethyl-2-cyano-3,3-diphenyl acrylate,
2-hydroxy-4-benzyloxybenzophenone,
2-(2'-hydroxy-3'-tert-butyl-5'-methylphenyl)-5-chlorobenzotriazole,
2-(2'-hydroxy-3',5'-di-tert-butylphenyl)benzotriazole,

2-(2'-hydroxy-4'-tert-octylphenyl)benzotriazole,
p-octylpheyl salicylate,
2-hydroxy-4-n-octoxybenzophenone,
2,2'-dihydroxy-4-n-octoxybenzophenone,
2-(2'-hydroxy-4'-octoxypheyl)benzotriazole,
2-(3,5-di-tert-amyl-2-hydroxyphenyl)benzotriazole,
2-(2'-hydroxy-3',5'-di-tert-butylphenyl)-5-chlorobenzotriazole,
2-ethyl-2'-ethoxy-5'-tert-butyl-N,N'-diphenyloxamide,
2-ethyl-2'-ethoxy-N,N'-diphenyloxamide,
2-hydroxy-4-dodecyloxybenzophenone,
2,4-di-tert-butylphenyl-3,5-di-tert-butyl-4-hydroxybenzoate,
3,5-di-tert-butyl-4-hydroxymyristyl benzoate,
bis(2,2',6,6'-tetramethyl-4-piperidine)sebacate,
[2,2'-thiobis(4-tert-octylphenolate)]-tert-butylaminonickel(II),
bis(3,5-di-tert-butyl-4-hydroxybenzoylphosphoric acid monoethyl ester)nickel salt,
bis(3,5-di-tert-butyl-4-hydroxybenzoylphosphoric acid monooctyl ester)nickel salt,
2,2'-thiobis(4,4'-alkylphenol)nickel(II) salt,
dimethyl succinate[2-(4-hydroxy-2,2,6,6-tetramethyl-1-piperidyl)ethanol] polycondensate
poly[{6-(1,1,3,3-tetramethylbutyl)imino}-1,3,5-triazine-2,4-diyl{4-(2,2,6,6-tetrametylpiperidyl)imino}hexamethylene],
4-benzoyloxy-2,2,6,6-tetramethylpiperidine,
tetrakis(2,2,6,6-tetramethyl-4-piperidyl)-1,2,3,4-butanetetracarboxylate,
1-[2-{3-(3,5-di-tert-butyl-4-hydroxyphenyl)propionyloxy}ethyl-4-[3-(3,5-di-tert-butyl-4-hydroxyphenyl)propionyloxy]-2,2,6,6-tetramethylpiperidine,
polymethyl-propyl-3-oxy-{1-(2,2,6,6-tetramethyl)piperidinyl}siloxane,
N,N'-bis(3-aminopropyl)ethylenediamine-2,4-bis[N-butyl-N-(1,2,2,6,6-pentamethyl-4-piperidyl)amino]-6-chloro-1,3,5-triazine,
2-(3,5-di-tert-butyl-4-hydroxybenzyl)-2-n-butyl-malonic acid(1,2,2,6,6-pentamethyl-4-piperidyl),
1,1'-(1,2-ethanediyl)bis(3,3,5,5,-tetramethylpiprazinone),
[2,2'-thiobis(4-tert-octylphenolate)]-2-ethylhexylamine-nickel(II),
3,3'-methylenebis(2-hydroxy-4-methoxybenzophenone),
2,4-dibenzoylresorcinol,
1,3-bis(4-benzoyl-3-hydroxyphenoxy)-2-propyl methacrylate,
8-acetyl-7,7,9,9-tetramethyl-3-octyl-1,3,8-triazaspiro[4,5]undecane-2,4-dione,
3-hydroxyphenyl benzoate,
2,4,5-trihydroxybutyrophenone,
2-ethylhexyl-2-cyano-3,3-diphenyl acrylate,
8-benzyl-7,7,9,9-tetramethyl-3-octyl-1,3,8-triazaspiro[4,5]undecane-2,4-dione,
1,3-bis(4-benzoyl-3-hydroxyphenoxy)-2-propyl acrylate,
2-(4-octoxy-2-hydroxyphenyl)benzotriazole, phenyl salicylate,
2,2'-methylenebis(6-tert-butyl-4-methylphenol),
bis(1,2,2,6,6-pentamethyl-4-piperidyl)sebacate,
1,2,2,6,6-pentamethyl-4-piperidinemethyl methacrylate,
2,2,6,6-tetramethyl-4-piperidienemethyl methacrylate, and
octadecene/N-(2,2,6,6-tetramethylpiperidinyl)-N-maleimidoxamide copolymer.

As the light stabilizers, those hitherto known are employable, and above all, hindered amine light stabilizers (HALS) are preferably employed. The light stabilizers can be used singly or in combination of two or more kinds.

<u>Hindered amine stabilizer</u>

As the hindered amine stabilizers, compounds having a structure wherein all hydrogen atoms bonded at the 2-position and the 6-position of piperidine are replaced with methyl groups, which are generally known, can be employed without specific limitation. For example, the following compounds can be employed.

(1) Bis(2,2,6,6-tetramethyl-4-piperidyl)sebacate,
(2) Dimethyl succinate-1-(2-hydroxyethyl)-4-hydroxy-2,2,6,6-tetramethylpiperidine polycondensate,
(3) Poly{[6-(1,1,3,3-tetramethylbutyl)imino-1,3,5-triazine-2-4-diyl][(2,2,6,6-tetramethyl-4-piperidyl)imino]hexamethylene[(2,2,6,6-tetramethyl-4-piperidyl)imino]},
(4) Tetrakis(2,2,6,6-tetramethyl-4-piperidyl)-1,2,3,4-butanetetracarboxylate,
(5) 2,2,6,6-Tetramethyl-4-piperidinyl benzoate,
(6) Bis-(1,2,6,6-tetramethyl-4-piperidinyl)-2-(3,5-di-t-butyl-4-hydroxybenzyl)-2-n-butyl malonate,
(7) Bis-(N-methyl-2,2,6,6-tetramethyl-4-piperidinyl)sebacate,
(8) 1,1'-(1,2-Ethanediyl)bis(3,3,5,5-tetramethylpiperazinone),
(9) (Mixed 2,2,6,6-tetramethyl-4-piperidyl/tridecyl)-1,2,3,4-butanetetracarboxylate,
(10) (Mixed 1,2,2,6,6-pentamethyl-4-piperidyl/tridecyl)-1,2,3,4-butanetetracarboxylate,
(11) Mixed {2,2,6,6-tetramethyl-4-piperidyl/β,β,β',β'-tetramethyl-3-9-[2,4,8,10-tetraoxaspiro(5,5)undecane]diethyl}-1,2,3,4-butanetetracarboxylate,
(12) Mixed {1,2,2,6,6-pentamethyl-4-piperidyl/β,β,β',β'-tetramethyl-3-9-[2,4,8,10-tetraoxaspiro(5,5)undecane]diethyl}-1,2,3,4-butanetetracarboxylate,
(13) N,N'-Bis(3-aminopropyl)ethylenediamine-2-4-bis[N-butyl-N-(1,2,2,6,6-pentamethyl-4-piperidyl)amino]-6-chloro-1,3,5-triazine condensate,
(14) Poly{[6-N-morpholyl-1,3,5-triazine-2-4-diyl][(2,2,6,6-tetramethyl-4-piperidyl)imino]hexamethylene[(2,2,6,6-tetramethyl-4-piperidyl)imino]},
(15) Condensate of N,N'-bis(2,2,6,6-tetramethyl-4-piperidyl)hexamethylenediamine and 1,2-dibromoethane, and
(16) [N-(2,2,6,6-tetramethyl-4-piperidyl)-2-methyl-2-(2,2,6,6-tetramethyl-4-piperidyl)imino]propionamide.

Of these, the compounds (1), (2), (3), (4), (8), (10), (11), (14) and (15) are preferably used.

These hindered amine stabilizers are used singly or in combination of two or more kinds.

It is desired that the hindered amine stabilizer is used in an amount of 0.005 to 2 parts by weight, preferably 0.01 to 1 part by weight, more preferably 0.05 to 0.5 part by weight, based on 100 parts by weight of the thermoplastic resin.

When the amount of the hindered amine stabilizer is in the above range per 100 parts by weight of the thermoplastic resin, stability of heat resistance and aging resistance of the resulting composition can be highly improved, costs of the stabilizer can be made low, and lowering of properties of the thermoplastic resin such as tensile strength does not take place.

Nucleating agent

Examples of the nucleating agents employable in the invention include an organic phosphoric acid type nucleating agent, a sorbitol type nucleating agent, an aromatic carboxylic acid type nucleating agent, a high-melting point polymer type nucleating agent, an inorganic nucleating agent and a rosin acid type nucleating agent. These nucleating agents can be used singly or in combination of two or more kinds.

Organic phosphoric acid type nucleating agent

The organic phosphoric acid type nucleating agent is, for example, a compound represented by the following formula (V) or a compound represented by the following formula (VI).

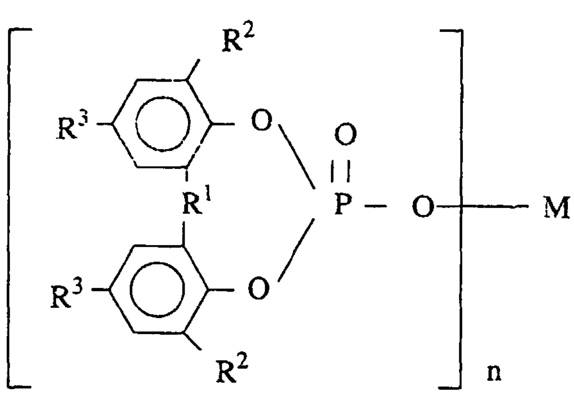

(V)

In the formula (V), $R^1$ is oxygen, sulfur or a hydrocarbon group of 1 to 10 carbon atoms which may have a branch; $R^2$ and $R^3$ are each hydrogen or a hydrocarbon group of 1 to 10 carbon atoms which may have a branch; $R^2$ and $R^3$ may be the same or different; $R^2$ and $R^2$, $R^3$ and $R^3$, or $R^2$ and $R^3$ may be bonded to each other to form a ring; M is a monovalent to trivalent metal atom; and n is an integer of 1 to 3.

Examples of the compounds represented by the formula (V) include:

sodium-2,2'-methylene-bis(4,6-di-t-butylphenyl)phosphate,
sodium-2,2'-ethylidene-bis(4,6-di-t-butylphenyl)phosphate,
lithium-2,2'-methylene-bis(4,6-di-t-butylphenyl)phosphate,
lithium-2,2'-ethylidene-bis(4,6-di-t-butylphenyl)phosphate,
sodium-2,2'-ethylidene-bis(4-i-propyl-6-t-butylphenyl)phosphate,
lithium-2,2'-methylene-bis(4-methyl-6-t-butylphenyl)phosphate,
lithium-2,2'-methylene-bis(4-ethyl-6-t-butylphenyl)phosphate,
calcium-bis[2,2'-thiobis(4-methyl-6-t-butylphenyl)phosphate],
calcium-bis[2,2'-thiobis(4-ethyl-6-t-butylphenyl)phosphate],
calcium-bis[2,2'-thiobis(4,6-di-t-butylphenyl)phosphate],
magnesium-bis[2,2'-thiobis(4,6-di-t-butylphenyl)phosphate],
magnesium-bis[2,2'-thiobis(4-t-octylphenyl)phosphate],
sodium-2,2'-butylidene-bis(4,6-dimethylphenyl)phosphate,
sodium-2,2'-butylidene-bis(4,6-di-t-butylphenyl)phosphate,
sodium-2,2'-t-octylmethylene-bis(4,6-dimethylphenyl)phosphate,
sodium-2,2'-t-octylmethylene-bis(4,6-di-t-butylphenyl)phosphate,
calcium-bis[2,2'-methylene-bis(4,6-di-t-butylphenyl)phosphate],
magnesium-bis[2,2'-methylene-bis(4,6-di-t-butylphenyl)phosphate],
barium-bis[2,2'-methylene-bis(4,6-di-t-butylphenyl)phosphate],
sodium-2,2'-methylene-bis(4-methyl-6-t-butylphenyl)phosphate,
sodium-2,2'-methylene-bis(4-ethyl-6-t-butylphenyl)phosphate,
sodium(4,4'-dimethyl-5,6'-di-t-butyl-2,2'-biphenyl)phosphate,
calcium-bis[(4,4'-dimethyl-6,6'-di-t-butyl-2,2'-biphenyl)phosphate]
sodium-2,2'-ethylidene-bis(4-m-butyl-6-t-butylphenyl)phosphate,
sodium-2,2'-methylene-bis(4,6-dimethylphenyl)phosphate,
sodium-2,2'-methylene-bis(4,6-diethylphenyl)phosphate,
potassium-2,2'-ethylidene-bis(4,6-di-t-butylphenyl)phosphate,
calcium-bis[2,2'-ethylidene-bis(4,6-di-t-butylphenyl)phosphate],
magnesium-bis[2,2'-ethylidene-bis(4,6-di-t-butylphenyl)phosphate],
barium-bis[2,2'-ethylidene-bis(4,6-di-t-butylphenyl)phosphate],
aluminum-tris[2,2'-methylene-bis(4,6-di-t-butylphenyl)phosphate], and
aluminum-tris[2,2'-ethylidene-bis(4,6-di-t-butylphenyl)phosphate].

The compounds represented by the formula (V) can be used singly or in combination of two or more kinds.

Of the above compounds represented by the formula (V), sodium-2,2'-methylene-bis(4,6-di-t-butylphenyl)phosphate is particularly preferable.

The compound represented by the following formula (VI) is also preferable as the organic phosphoric acid type nucleating agent.

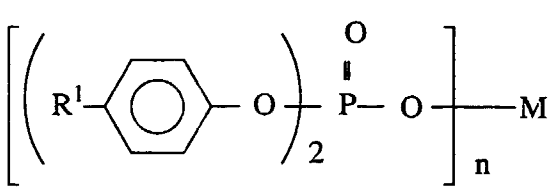

(VI)

In the formula (VI), $R^1$ is hydrogen or a hydrocarbon group of 1 to 10 carbon atoms which may have a branch; M is a monovalent to trivalent metal atom; and n is an integer of 1 to 3.

Examples of the compounds represented by the formula (VI) include:

sodium-bis(4-t-butylphenyl)phosphate,
sodium-bis(4-methylphenyl)phosphate,
sodium-bis(4-ethylphenyl)phosphate,
sodium-bis(4-i-propylphenyl)phosphate,
sodium-bis(4-t-octylphenyl)phosphate,
potassium-bis(4-t-butylphenyl)phosphate,
calcium-bis(4-t-butylphenyl)phosphate,
magnesium-bis(4-t-butylphenyl)phosphate,
lithium-bis(4-t-butylphenyl)phosphate, and
aluminum-bis(4-t-butylphenyl)phosphate.

The compounds represented by the formula (VI) can be used singly or in combination of two or more kinds. Of the above compounds represented by the formula (VI), sodium-bis(4-t-butylphenyl)phosphate is particularly preferable. The compound represented by the formula (V) and the compound represented by the formula (VI) may be used in combination.

Sorbitol type nucleating agent

The sorbitol type nucleating agent is, for example, a compound represented by the following formula (VII) or a compound represented by the following formula (VIII).

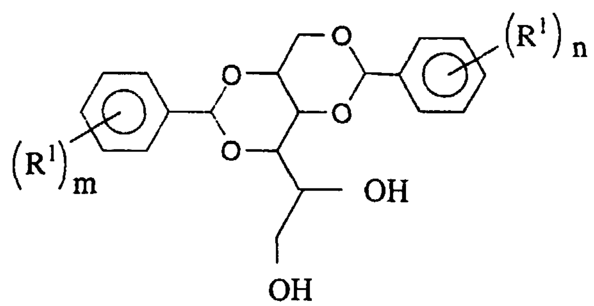

(VII)

In the formula (VII), each $R^1$ is the same or different and is hydrogen, halogen such as chlorine or a hydrocarbon group of 1 to 10 carbon atoms which may have a branch; and m and n are each an integer of 0 to 5.

Examples of the compounds represented by the formula (VII) include:

1,3,2,4-dibenzylidenesorbitol,
1,3-benzylidene-2,4-p-methylbenzylidenesorbitol,
1,3-benzylidene-2,4-p-ethylbenzylidenesorbitol,
1,3-p-methylbenzylidene-2,4-benzylidenesorbitol,
1,3-p-ethylbenzylidene-2,4-benzylidenesorbitol,
1,3-p-methylbenzylidene-2,4-p-ethylbenzylidenesorbitol,
1,3-p-ethylbenzylidene-2,4-p-methylbenzylidenesorbitol,
1,3,2,4-di(p-methylbenzylidene)sorbitol,
1,3,2,4-di(p-ethylbenzylidene)sorbitol,
1,3,2,4-di(p-n-propylbenzylidene)sorbitol,
1,3,2,4-di(p-i-propylbenzylidene)sorbitol,
1,3,2,4-di(p-n-butylbenzylidene)sorbitol,
1,3,2,4-di(p-s-butylbenzylidene)sorbitol,
1,3,2,4-di(p-t-butylbenzylidene)sorbitol,
1,3,2,4-di(2',4'-dimethylbenzylidene)sorbitol,
1,3,2,4-di(p-methoxybenzylidene)sorbitol,
1,3,2,4-di(p-ethoxybenzylidene)sorbitol,
1,3-benzylidene-2-4-p-chlorobenzylidenesorbitol,
1,3-p-chlorobenzylidene-2,4-benzylidenesorbitol,

1,3-p-chlorobenzylidene-2,4-p-methylbenzylidenesorbitol,
1,3-p-chlorobenzylidene-2,4-p-ethylbenzylidenesorbitol,
1,3-p-methylbenzylidene-2,4-p-chlorobenzylidenesorbitol,
1,3-p-ethylbenzylidene-2,4-p-chlorobenzylidenesorbitol, and
1,3,2,4-di(p-chlorobenzylidene)sorbitol.

The compounds represented by the formula (VII) can be used singly or in combination of two or more kinds.

Of the above compounds represented by the formula (VII), particularly preferable are 1,3,2,4-dibenzylidenesorbitol, 1,3,2,4-di(p-methylbenzylidene)sorbitol, 1,3,2,4-di(p-ethylbenzylidene)sorbitol, 1,3-p-chlorobenzylidene-2,4-p-methylbenzylidenesorbitol, 1,3,2,4-di(p-chlorobenzylidene)sorbitol and mixtures thereof.

The compound represented by the following formula (VIII) is also preferable as the sorbitol type nucleating agent.

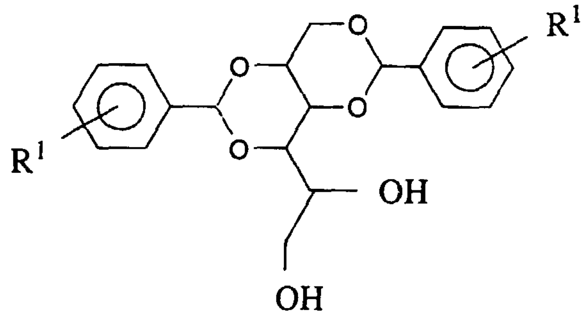

(VIII)

In the formula (VIII), each $R^1$ is the same or different and is an alkyl group of 1 or 2 carbon atoms.

The compound represented by the formula (VII) and the compound represented by the formula (VIII) may be used in combination.

Aromatic carboxylic acid type nucleating agent

The aromatic carboxylic acid type nucleating agent preferably used is, for example, aluminum hydroxy-di-para-t-butylbenzoate represented by the following formula (IX).

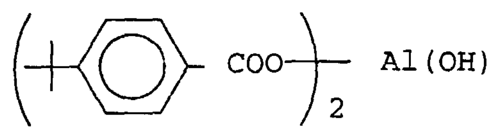

(IX)

Also available as the nucleating agents are high-melting point polymers, other metallic salts of aromatic carboxylic acids, metallic salts of aliphatic carboxylic acids and inorganic compounds. Examples of the high-melting point polymers include polyvinyl cycloalkanes, such as polyvinyl cyclohexane and polyvinyl cyclopentane; poly-3-methyl-1-pentene; poly-3-methyl-1-butene; and polyalkenylsilane. Examples of the metallic salts include aluminum benzoate, aluminum p-t-butylbenzoate, sodium adipate, sodium thiophenecarboxylate and sodium pyrrolecarboxylate.

Examples of the inorganic compounds include silica, diatomaceous earth, alumina, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulfite, talc, clay, mica, asbestos, glass fiber, glass flake, glass bead, calcium silicate, montmorillonite, bentonite, graphite, aluminum powder and molybdenum sulfide. Also available are brominated biphenyl ether and cyclic triethylene glycol terephthalate.

Rosin acid type nucleating agent

In the present invention, generally known rosin acid type nucleating agents (excluding rosin esters) can be employed.

The rosin acid type nucleating agent is preferably used when the functional group-containing organic compound (C) contained in the thermoplastic resin composition of the invention is at least one compound selected from the group consisting of the hydrocarbon resin, the modified polyolefin, the oxidized polyolefin and the natural wax.

Examples of the rosin acid type nucleating agents include rosin acid partial metallic salts, such as rosin acid partial sodium salts, rosin acid partial potassium salts and rosin acid partial magnesium salts. The rosin acid used herein is a resin acid contained in rosin and is sometimes referred to as a "rosin type resin acid".

The rosin acid type nucleating agent is preferably a partial metallic salt of at least one rosin acid selected from natural rosins, modified rosins and purified products thereof; it is more preferably a partial metallic salt of at least one rosin acid selected from dehydroabietic acid, dihydroabietic acid, dihydropimaric acid and derivatives of these acids; and it is particularly preferably at least one rosin acid partial metallic salt selected from a partial metallic salt of a rosin acid (rosin type resin acid) represented by the aforesaid formula (Ia) (i.e., the following formula (Ia)) and a partial metallic salt of a rosin acid represented by the aforesaid formula (Ib) (i.e., the following formula (Ib)).

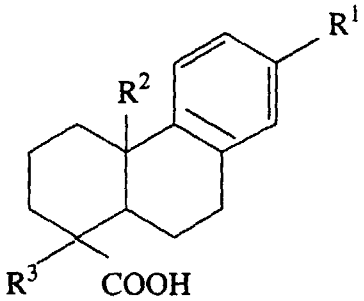 (Ia) 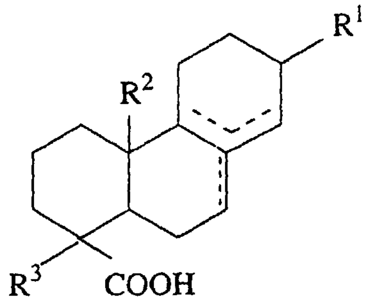 (Ib)

In the above formulas, $R^1$, $R^2$ and $R^3$ are the same as previously described.

The rosin acid partial metallic salt used herein is a reaction product of a rosin acid and a metallic compound, and it means not only a mixture of a rosin acid metallic salt and an unreacted rosin acid but also a rosin acid metallic salt containing no unreacted rosin acid.

The metallic compound which reacts with a rosin acid to form a metallic salt is a compound containing a metal element such as sodium, potassium or magnesium and producing a salt together with the rosin acid. Examples of such compounds include chlorides, nitrates, acetates, sulfates, carbonates, oxides and hydroxides of the above metals.

Examples of the rosin acids include:

natural rosins, such as gum rosin, tall oil rosin and wood rosin;
various modified rosins, such as disproportionated rosin, hydrogenated rosin, dehydrogenated rosin, polymerized rosin and α,β-ethylenically unsaturated carboxylic acid modified rosin;
purified products of the natural rosins; and
purified products of the modified rosins.

As previously described, the natural rosins generally contain plural kinds of resin acids, such as pimaric acid, sandaracopimaric acid, palustric acid, isopimaric acid, abietic acid, dehydroabietic acid, neoabietic acid, dihydropimaric acid, dihydroabietic acid and tetrahydroabietic acid.

Examples of unsaturated carboxylic acids used for preparing the α,β-ethylenically unsaturated carboxylic acid modified rosins include maleic acid, maleic anhydride, fumaric acid, itaconic acid, itaconic anhydride, citraconic acid, acrylic acid and methacrylic acid.

Of the above resin acids, preferable is at least one rosin acid selected from the disproportionated rosin, the hydrogenated rosin and the dehydrogenated rosin, and more preferable is at least one rosin acid selected from the dehydroabietic acid, the dihydroabietic acid, the dihydropimaric acid and derivatives thereof.

Examples of the partial metallic salts of the rosin acids include partial sodium salts of the rosin acids, partial potassium salts of the rosin acids and partial magnesium salts of the rosin acids.

In the present invention, it is particularly preferable to use a compound represented by the aforesaid formula (Ia)

(compound (Ia)) or a compound represented by the aforesaid formula (Ib) (compound (Ib)) as the rosin acid for preparing the nucleating agent.

Of the compounds (Ia) and the compounds (Ib), preferable is a compound wherein $R^1$, $R^2$ and $R^3$ are alkyl groups which are the same or different. Particularly preferable is a compound wherein $R^1$ is i-propyl and $R^2$ and $R^3$ are each methyl. That is, the dehydroabietic acid is particularly preferable as the compound (Ia), and the dihydroabietc acid is particularly preferable as the compound (Ib).

The partial metallic salts of these compounds contribute particularly to improvement in the crystallization rate of the crystalline resin.

The metallic salt of the compound (Ia) is, for example, a compound represented by the following formula (XIa) (compound (XIa)), and the metallic salt of the compound (Ib) is, for example, a compound represented by the following formula (XIb) (compound (XIb)).

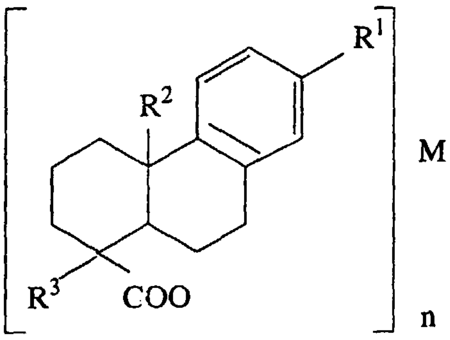

(XIa)

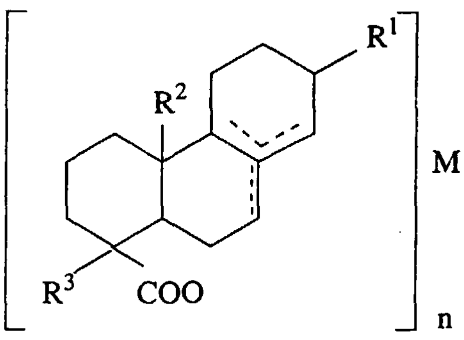

(XIb)

In the above formulas (XIa) and (XIb), $R^1$, $R^2$ and $R^3$ are the same as those in the formulas (Ia) and (Ib).

M is a monovalent to trivalent metal ion.

Examples of the metal ions include:

monovalent metal ions, such as ions of lithium, sodium, potassium, rubidium and cesium;
divalent metal ions, such as ions of beryllium, magnesium, calcium, strontium, barium and zinc; and
trivalent metal ions, such as aluminum ion.

Of these, preferable are sodium ion, potassium ion and magnesium ion.

n is an integer equal to the valence of the metal ion M, and is an integer of 1 to 3.

Of the compounds (XIa) and the compounds (XIb), preferable is a compound wherein $R^1$, $R^2$ and $R^3$ are alkyl groups which are the same or different or a compound wherein M is a monovalent or divalent metal ion. More preferable is a compound wherein $R^1$ is i-propyl and $R^2$ and $R^3$ are each methyl or a compound wherein M is sodium ion, potassium ion or magnesium ion. Particularly preferable is a compound wherein $R^1$ is i-propyl, $R^2$ and $R^3$ are each methyl, and M is sodium ion, potassium ion or magnesium ion. These compounds contribute particularly to improvement in the crystalline rate.

Examples of the compounds (XIa) include metallic salts of dehydroabietic acid, such as lithium dehydroabietate, sodium dehydroabietate, potassium dehydroabietate, beryllium dehydroabietate, magnesium dehydroabietate, calcium dehydroabietate, zinc dehydroabietate and aluminum dehydroabietate. Of these, sodium dehydroabietate, potassium dehydroabietate and magnesium dehydroabietate are preferably employed.

Examples of the compounds (XIb) include metallic salts of dihydroabietic acid, such as lithium dihydroabietate, sodium dihydroabietate, potassium dihydroabietate, beryllium dihydroabietate, magnesium dihydroabietate, calcium dihydroabietate, zinc dihydroabietate and aluminum dihydroabietate. Of these, sodium dihydroabietate, potassium dihydroabietate and magnesium dihydroabietate are preferably employed.

In the present invention, at least two kinds of rosin acid partial metallic salts may be used as the nucleating agent.

The at least two kinds of rosin acid partial metallic salts may be either those wherein the rosin acids are the same and the metals are different, those wherein the rosin acids are different and the metals are the same, or those wherein the rosin acids are different and the metals are different. In the at least two kinds of rosin acid partial metallic salts, the rosin acid metallic salts are desirably contained in the total amount of preferably 5 to 100 % by weight, more preferably 10 to 100 % by weight.

Though the ratio between the rosin acid metallic salts in the at least two kinds of rosin acid partial metallic salts is optionally determined, they are desirably combined so that the amount of one rosin acid metallic salt is more than 0 % by mol, preferably 5 to 95 % by mol, and the amount of the other rosin acid metallic salt(s) is the residual amount, i.e., less than 100 % by mol, preferably 95 to 5 % by mol, based on the total amount (100 % by mol) of the rosin acid metallic salts in the at least two kinds of rosin acid partial metallic salts.

As a combination of at least two kinds of the rosin acid partial metallic salts, preferable is a combination of a rosin acid partial potassium salt and either a rosin acid partial sodium salt or a rosin acid partial magnesium salt. In this combination, it is desired that the amount of the rosin acid potassium salt is not less than 20 % by mol, preferably 40 to 95 % by mol, more preferably 45 to 80 % by mol, and the amount of the rosin acid sodium salt or the rosin acid magnesium salt is the residual amount, i.e., less than 80 % by mol, preferably 60 to 5 % by mol, more preferably 55 to 20 % by mol, based on the total amount (100 % by mol) of the rosin acid metallic salts in the two rosin acid partial metallic salts.

The rosin acid partial metallic salt containing at least two metals is superior to the rosin acid partial metallic salt containing only one metal in the dispersibility in the thermoplastic resin.

Metal deactivator

As the metal deactivators, compounds having been hitherto used to improve deterioration of resins caused by various metals are employable in the invention without specific limitation.

Examples of the metal deactivators employable in the invention include:

hydrazine compounds, such as N,N'-bis[3-(3,5-di-t-butyl-4-hydroxyphenyl)propionyl]hydrazine (trade name: IRGANOX MD1024, available from Ciba-Geigy Corporation), distearylhydrazine, dilauroylhydrazine, dicaproylhydrazine, dioctanoylhydrazine, N,N'-bis(2-ethylhexanoyl)hydrazine, salicyloyl-benzoylhydrazine and salicylidenesalicyloylhydrazine (trade name: Chel-180, available from Ciba-Geigy Corporation);

hydrazide compounds, such as isophthalic acid bis($\alpha$-phenoxypropionyl)hydroazide, oxalo-bis-12-hydroxybenzylidenehydrazide (trade name: Eastman Inhibitor OABH, available from Eastman Kodak Co.), bis-salicyloyl($\beta$,$\beta$'-thiodipropionic acid)hydrazide, bis-acetoadipic acid hydrazide (trade name: G109-367, available from Ciba-Geigy Corporation) and decamethylenedicarboxylic acid disalicyloylhydrazide (trade name: Adecastab CDA-6, available from Adeca Argas Co.); and

nitrogen-containing aromatic compounds, such as 3-(N-salicyloyl)amino-1,2,4-triazole (trade name: Adecastab CDA-1, available from Adeca Argas Co.), benzotriazole, 3-amino-1,2,4-triazole, 1,3-diphenyltriazine and 5-phenyltetrazole.

Also employable are N-salicyloyl-N'-aldehydrazine, N,N-dibenzal(oxalhydrazide), N,N-bis(3,5-di-t-butyl-hydroxyhydrocinnamate) and 2,2'-oxamide-bis-ethyl-3-(3,5-di-t-butyl-4-hydroxyphenyl)propionate.

The metal deactivators can be used singly or in combination of two or more kinds.

Of the above metal deactivators, preferable are N,N'-bis[3-(3,5-di-t-butyl-4-hydroxyphenyl)propionyl]hydrazine (trade name: IRGANOX MD1024, available from Ciba-Geigy Corporation), isophthalic acid bis($\alpha$-phenoxypropionyl)hydroazide, 3-(N-salicyloyl)amino-1,2,4-triazole (trade name: Adecastab CDA-1, available from Adeca Argas Co.) and 2,2'-oxamide-bis-ethyl-3-(3,5-di-t-butyl-4-hydroxyphenyl)propionate (trade name: Naugard XL-1, available from Uniroyal Co.).

When the metal deactivator is contained in the thermoplastic resin composition of the invention, the composition can be prevented from deterioration caused by metals such as copper, cobalt, iron, vanadium, nickel, titanium, calcium, silver, zinc, aluminum, magnesium, lead, chromium, manganese, cadmium, tin, zirconium and hafnium, whereby the

composition becomes a polyolefin composition (particularly propylene polymer composition) having excellent resistance to deterioration by metals, particularly excellent resistance to deterioration by metals at high temperatures. Therefore, the composition of the invention is free from change of properties even when brought into direct contact with metals, and the composition shows excellent long-term stability.

If one or more kinds of hydroxides such as magnesium hydroxide, aluminum hydroxide and calcium hydroxide are used in combination with the metal deactivator, deterioration of the resin caused by metals can be greatly improved by virtue of synergistic effect of them. In this case, the hydroxide is desirably used in an amount of 0.1 to 20 parts by weight, preferably 0.1 to 5 parts by weight, based on 100 parts by weight of the thermoplastic resin.

Lubricant

As the lubricants, those having been hitherto used as lubricants of resins are employable in the invention without specific limitation. Examples of the lubricants include:

synthetic hydrocarbons, such as polyethylene wax;
synthetic denatured waxes, such as montan wax derivative, paraffin wax derivative and microcrystalline wax derivative;
synthetic hydrogenated waxes, such as hardened castor oil, hardened castor oil derivative, hardened rapeseed oil and hardened soybean oil;
synthetic metallic soaps, such as calcium stearate, barium stearate, zinc stearate and lithium stearate;
synthetic higher fatty acids, such as stearic acid and 12-hydroxystearic acid;
synthetic fatty amides, such as oleic amide, stearamide, erucic amide, ethylenebisstearamide and EBS;
synthetic fatty esters, such as butyl stearate and long-chain fatty ester; and
synthetic higher alcohols, such as cetanol and stearyl alcohol.

Also employable as the lubricants are commercially available ones, for example, "Armoslip CP" (trade name, available from Lion Co., Ltd.), "Neutron 2" (trade name, available from Nippon Seika K.K.), "Alflow P-10" (trade name, available from Nippon Oils & Fats Co., Ltd.) and "Armowax EBS" (trade name, available from Lion Armor K.K.).

The lubricants can be used singly or in combination of two or more kinds.

It is desired that the lubricant is used in an amount of 0.005 to 2 parts by weight, preferably 0.01 to 1 part by weight, more preferably 0.05 to 1 part by weight, based on 100 parts by weight of the thermoplastic resin.

When the amount of the lubricant is in the above range per 100 parts by weight of the thermoplastic resin, the thermoplastic resin composition (particularly propylene polymer composition) of the invention can be improved in the flowability when it is melted under heating and molded. Besides, tackiness of the composition to the molding machine or the mold is lowered to improve mold release of the molded product. Further, when the composition is molded into films, slip properties (e.g., ease of opening) of the films can be improved. Moreover, lowering of properties of the thermoplastic resin such as tensile strength does not take place.

The metallic salt of higher fatty acid, such as calcium stearate, functions as not only a lubricant but also a rust preventive. Therefore, the propylene polymer composition containing the metallic salt of higher fatty acid exhibits excellent release properties and is very effective for rust prevention of molding machines.

Anti-blocking agent

Examples of the anti-blocking agents employable in the invention include synthetic or natural silica, silicon dioxide, talc and zeolite.

The anti-blocking agent has a mean particle diameter of preferably not more than 5 μm, more preferably not more than 4 μm. When the mean particle diameter is within this range, films of good transparency and excellent scratch resistance can be obtained.

The anti-blocking agent is desired to have a water content of preferably not more than 15 % by weight, more preferably not more than 5 % by weight. The anti-blocking agent having a water content in this range is preferably used in the invention, because foaming does not take place in the film production process.

The anti-blocking agent is used in an amount of preferably 0.01 to 0.5 part by weight, more preferably 0.05 to 0.2 part by weight, based on 100 parts by weight of the thermoplastic resin.

Slip agent

The slip agent employable in the invention is, for example, a straight-chain monocarboxylic monoamide compound or a straight-chain monocarboxylic bisamide compound. These compounds can be used singly or in combination of two

or more kinds.

Examples of the straight-chain monocarboxylic monoamide compounds include oleic amide, stearamide, erucic amide, palmitic amide, behenic amide and lauric amide.

Examples of the straight-chain monocarboxylic bisamide compounds include ethylenebisoleic amide, ethylenebisstearamide and methylenebisstearamide.

From the viewpoints of film slip properties in the molding process and film slip properties after the molding process, single use of the straight-chain monocarboxylic monoamide compound is preferable. In case of the later-described film of the invention, particularly a polypropylene film laminate, use of a combination of the straight-chain monocarboxylic monoamide compound and the straight-chain monocarboxylic bisamide compound is preferable from the viewpoint of slip properties after laminating.

The slip agent is used in an amount of preferably 0.01 to 1.0 part by weight, more preferably 0.03 to 0.5 part by weight, particularly preferably 0.05 to 0.2 part by weight, based on 100 parts by weight of the thermoplastic resin. When the straight-chain monocarboxylic monoamide compound and the straight-chain monocarboxylic bisamide compound are used in combination, the straight-chain monocarboxylic monoamide compound/straight-chain monocarboxylic bisamide compound ratio by weight is desired to be in the range of preferably 20/80 to 80/20, more preferably 30/70 to 70/30.

Heat retaining agent

In the present invention, inorganic fillers such as silica, magnesium compound and hydrotalcite, and water absorbing resins such as an ethylene/vinyl alcohol copolymer can be used to improve heat retaining properties. Of these, hydrotalcite compounds are preferably employed.

Examples of the hydrotalcite compounds employable in the invention are given below.

(1) Hydro-talc

Hydrated carbonate minerals represented by the formula $Mg_6R_2(OH)_{16}CO_3/4H_2O$ (R = Al, Cr or Fe) (natural minerals slightly produced in Raul district of the Soviet Union or Snarum district of Norway)

(2) Synthetic hydrotalcites of the following formula

$$M^{2+}{}_{1-x}Al_x(OH)_2(A^{n-})_{x/n} \cdot mH_2O$$

In the above formula, $0<x<0.5$; $0 \leq m \leq 2$; $M^{2+}$ is a divalent metal ion selected from Mg, Ca and Zn; and $A^{n-}$ is an anion having a valence of n, such as $Cl^-$, $Br^-$, $I^-$, $NO_3^-$, $ClO_4^-$, $SO_4^{2-}$, $CO_3^{2-}$, $SiO_3^{2-}$, $HPO_4^{2-}$, $HBO_3^{2-}$, $PO_4^{3-}$, $Fe(CN)_6^{3-}$, $Fe(CN)_4^{4-}$, $CH_3COO^-$, $C_6H_4(OH)COO^-$ or $(OOC\text{-}COO)^{2-}$

There is no specific limitation on the mean particle diameter of the hydrotalcite compounds, with the proviso that the compounds have no bad influences on the film appearance, extensibility and moldability. In general, the mean particle diameter is usually not more than 10 μm, preferably not more than 5 μm, more preferably not more than 3 μm.

In order to improve dispersibility of the hydrotalcite compound, it is preferable to treat the compound with a surface treatment agent. Examples of the surface treatment agents include paraffin, fatty acids, higher alcohols, polyhydric alcohols, thionate coupling agents and silane coupling agents.

The hydrotalcite compound is used in such an amount that the thermoplastic resin/hydrotalcite compound ratio by weight becomes 98-60/2-40, preferably 98-75/2-25.

Anti-fogging agent

The anti-fogging agent for use in the invention is preferably a fluorine surface active agent wherein a part of or all of hydrogen atoms bonded to carbon atoms of the hydrophilic group in an ordinary surface active agent are replaced with fluorine atoms, and is particularly preferably a fluorine surface active agent having a perfluoroalkyl group or a perfluoroalkenyl group.

Typical examples of the fluorine surface active agents employable in the invention are given below.

(a) Anionic fluorine surface active agent

(1) -COOM type

$$R_fCOOM$$

$R_fSO_2N(R')_2CH_2COOM$

(2) $-OSO_3M$ type

$R_fBNR'YOSO_3M$

(3) $-SO_3M$ type

$R_fSO_3M$

$R_fCH_2O(CH_2)_mSO_3M$

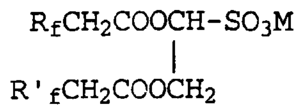

(4) $-OPO(OM)_2$ type

$R_fBNR'YOP(=O)(NM)_2$

In the above formulas, $R_f$ and $R'_f$ are each a fluoroalkyl group wherein a part of or all of hydrogen atoms of the alkyl group are replaced with fluorine atoms; B is $-CO-$, $-CO_2-$ or $-SO_2-$; R' is a hydrogen atom or a lower alkyl group; Y is $-CH_2-$ or $-C_2H_4OCH_2-$; and M is a hydrogen atom, $-NH_4$, an alkali metal or an alkali earth metal. (The same shall apply hereinafter.)

The fluoroalkyl group is preferably a polyfluoroalkyl group having any of the following structures.

$CF_3-(CF_3)_r-$ (r: integer of 2 to 19)

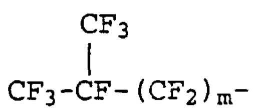 (m: integer of 0 to 17)

$HCF_2-(CF_2)_n-$ (n: integer of 2 to 19)

Each of $R_f$ and $R'_f$ in the invention may be a branched polyfluoroalkyl group synthesized by oligomerization of $CF_2=CF_2$ or $CF_3-CF=CF_2$, or may be $C_3F_7O-(C_3F_6O)_kCO-$ (k is an integer of 0 to 5), in addition to the above-mentioned fluoroalkyl group.

(b) Cationic fluorine surface active agent

(1)

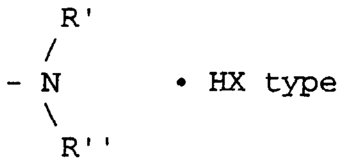

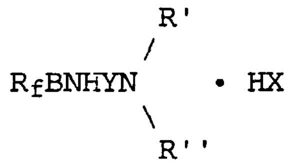

(2) ⋟N + • X - type

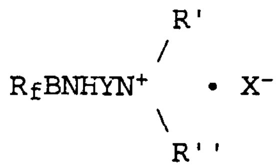

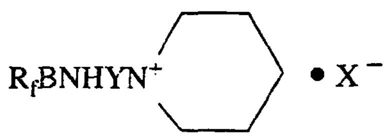

In the above formulas, $R_f$, B, $R'_f$ and Y have the same meanings as defined above; R" is a hydrogen atom or a lower alkyl group; HX is an acid; and X is halogen or an acid radical.

(c) Ampholytic fluorine surface active agent

(1) $-N^+(R')_2-COO^-$ type

$$R_fBNHYN^+(R')_2(CH_2)_mCOO-$$

In the above formula, $R_f$, B, $R'_f$ and Y have the same meanings as defined above.

(d) Nonionic fluorine surface active agent

(1) -OH type

$$R_fOH$$

(2) -O- type

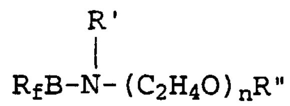

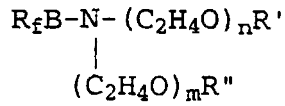

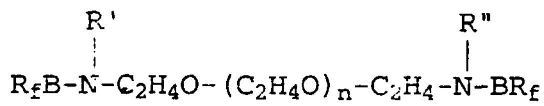

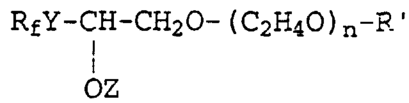

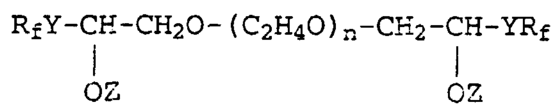

In the above formulas, $R_f$, B and R' have the same meanings as defined above; Y is $-CH_2-$ or $-C_2H_4OCH_2-$; and Z is a hydrogen atom, -C(=O)R or -C(=O)NHR. R is a hydrogen atom or a lower alkyl group. (The same shall apply hereinafter.)

Preferred examples of the fluorine surface active agents of the above types and other types are described below.

(i)

$$C_nF_{2n+1}COOM$$

In the above formula, M is a hydrogen atom, an alkali metal or $-NH_4$, and n is 5 to 12, preferably 6 to 10. Specific examples are as follows.

$$C_9F_{19}COONa$$

$$C_5F_{17}COOLi$$

(ii)

$$C_nF_{2n+1}CONH(C_2H_4O)_mH$$

In the above formula, n is 5 to 12, preferably 6 to 10, and m is 1 to 30, preferably 2 to 20. A specific example is as follows.

$$C_9F_{19}CONH(C_2H_4O_3)H$$

(iii)

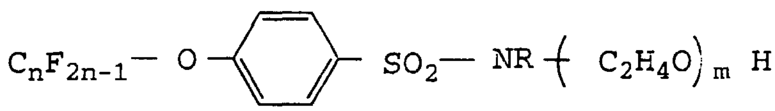

In the above formula, R is a hydrogen atom or a lower alkyl group, n is 6 to 12, preferably 9, and m is 2 to 30, preferably 3 to 20. A specific example is as follows.

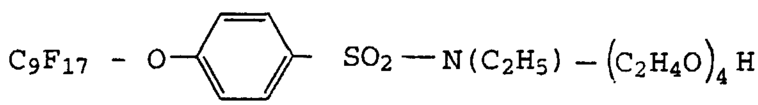

(iv)

$$C_nF_{2n+1}CONHC_3H_6N^+(CH_3)_2C_2H_4COO^-$$

In the above formula, n is 5 to 12, preferably 6 to 10. A specific example is as follows

$$C_9F_{17}CONHC_3H_6N^+(CH_3)_2C_2H_4COO\text{-}$$

(v)

$$C_nF_{2n+1}CONHC_3H_6N^+(CH_3)_2 \cdot X^-$$

In the above formula, X is halogen or an acid radical, and n is 5 to 12, preferably 6 to 10. A specific example is as follows.

$$C_8F_{17}CONHC_3H_6N^+(CH_3)_2 \cdot I^-$$

(vi)

$$C_nF_{2n+1}(CH_2)_mCOOM$$

In the above formula, M is a hydrogen atom, an alkali metal or $-NH_4$, n is 3 to 12, preferably 5 to 10, and m is 1 to 16, preferably 2 to 10. Specific examples are as follows.

$$C_7F_{15}(CH_2)_5COONa$$

$$C_8F_{17}(CH_2)_4COOK$$

(vii)

$$C_nF_{2n+1}SO_2N(C_2H_5)C_2H_4OPO(OH)_2$$

In the above formula, n is 5 to 12, preferably 6 to 10. A specific example is as follows.

$$C_8F_{17}SO_2N(C_2H_5)C_2H_4OPO(OH)_2$$

(viii)

$$C_nF_{2n+1}SO_2N(C_2H_5)CH_2COOM$$

In the above formula, M is a hydrogen atom, an alkali metal or $-NH_4$, and n is 5 to 12, preferably 6 to 10. A specific example is as follows.

$$C_8F_{17}SO_2N(C_2H_5)CH_2COOK$$

(ix)

$$C_nF_{2n+1}SO_2N(C_2H_5)C_2H_4OSO_3H$$

In the above formula, n is 5 to 12, preferably 6 to 10. A specific example is as follows.

$$C_8F_{17}SO_2N(C_2H_5)C_2H_4OSO_3H$$

(x)

$$C_nF_{2n+1}SO_2N(C_2H_5)(C_2H_4O)_mH$$

In the above formula, n is 5 to 12, preferably 6 to 10, and m is 1 to 30, preferably 2 to 20. A specific example is as follows.

$$C_8F_{17}SO_2N(C_2H_5)(C_2H_4O)_{14}H$$

(xi)

$$C_nF_{2n+1}CON(C_2H_5)(C_2H_4O)_mH$$

In the above formula, n is 5 to 12, preferably 6 to 10, and m is 1 to 30, preferably 2 to 20. A specific example is as follows.

$$C_8F_{17}CON(C_2H_5)(C_2H_4O)_{14}H$$

(xii)

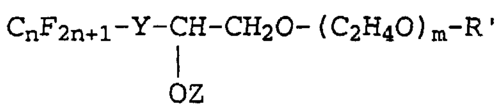

In the above formula, n is 5 to 12, preferably 6 to 10, m is 1 to 30, preferably 2 to 20, Y is $-CH_2-$ or $-C_2H_4OCH_2-$, and Z is a hydrogen atom, -C(=O)R or -C(=O)NHR. Specific examples are as follows.

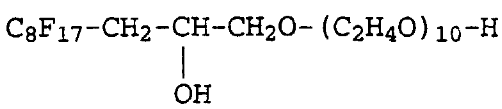

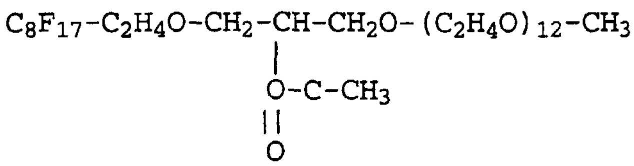

(xiii)

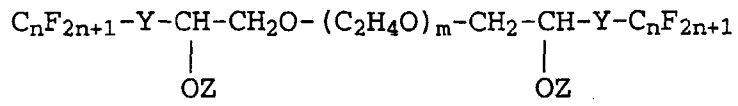

In the above formula, n is 5 to 12, preferably 6 to 10, m is 1 to 30, preferably 2 to 20, Y is $-CH_2-$ or $-C_2H_4OCH_2-$, and Z is a hydrogen atom, -C(=O)R or -C(=O)NHR. A specific example is as follows.

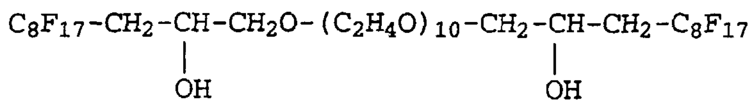

(xiv)

$$C_nF_{2n+1}SO_2N(C_2H_5)(C_2H_4O)_mC_2H_4N(C_2H_5)SO_2C_nF_{2n+1}$$

In the above formula, n is 5 to 12, preferably 6 to 10, and m is 1 to 30, preferably 2 to 20. A specific example is as follows.

$$C_8F_{17}SO_2N(C_2H_5)(C_2H_4O)_{14}C_2H_4N(C_2H_5)SO_2C_8F_{17}$$

(xv)

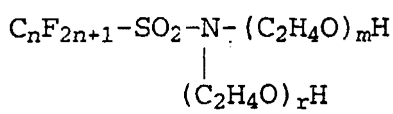

In the above formula, n is 5 to 12, preferably 6 to 10, m is 1 to 30, preferably 2 to 20, and r is 1 to 30, preferably 2 to 20. A specific example is as follows.

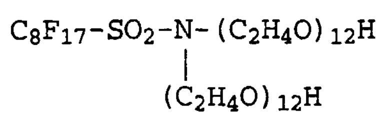

The fluorine surface active agents mentioned above can be used singly or in combination of two or more kinds.

The amount of the fluorine surface active agent added is not critical and can be varied over a wide range according to the type of the fluorine surface active agent and the type of the resin used. In general, the amount thereof can be at least 0.01 part by weight based on 100 parts by weight of the resin. Though the upper limit is not strictly limited, it is usually about 2.0 parts by weight, because use of too large amount of the surface active agent may cause bleedout or whitish turbidity.

Film

The film of the invention has a layer comprising the above-mentioned thermoplastic resin composition. The film may be a single-layer film or a multi-layer film, with the proviso that it has at least one layer of the thermoplastic resin composition.

The single-layer film can be produced by molding the thermoplastic resin composition into a film by a conventional method. For example, the single-layer film can be produced by extruding a molten thermoplastic resin composition from a T-die using a single-screw extruder, a kneading extruder, a ram extruder, a gear extruder or the like. For the molding conditions, any of conventional condistions is available. The film may be a stretched film, and the stretched film can be

produced by stretching a sheet or a film of the thermoplastic resin composition by the use of a conventional stretching device. Examples of the stretching methods include tentering (longitudinal-vertical stretching, vertical-longitudinal stretching), simultaneous biaxial stretching and monoaxial stretching. The film may be an inflation film.

The multi-layer film can be produced by a conventional method similarly to the single-layer film. For example, the multi-layer film can be produced by a co-extrusion film molding method (e.g., co-extrusion T-die method, co-extrusion inflation method, co-extrusion laminating method) or a film laminating method (e.g., dry laminating method).

As described above, the film of the invention may be a single-layer film or a multi-layer film (laminated film), but preferable is a three-layer laminated film having an outer layer, an intermediate layer and an inner layer laminated in this order (outer layer/intermediate layer/inner layer), at least one of said layers being formed from the thermoplastic resin composition.

The film of the invention exhibits antistatic properties and anti-fogging properties immediately after the film is produced, and retains stable antistatic properties and anti-fogging properties over a long period of time.

Preferred examples of the three-layer laminated films using the thermoplastic resin composition of the invention are described below. In the below-described laminated films, an outer layer comprising an ethylene/α-olefin copolymer (a), an intermediate layer comprising an ethylene/α-olefin copolymer (b) and an inner layer comprising the thermoplastic resin composition are laminated in this order (outer layer/intermediate layer/inner layer).

Outer layer

The ethylene/α-olefin copolymer (a) for forming the outer layer is a copolymer of ethylene and an α-olefin of 4 to 12 carbon atoms which may have a branch. The α-olefin of 4 to 12 carbon atoms may be straight-chain or branched, and examples thereof include 1-butene, 1-pentene, 1-hexene, 4-methyl-1-pentene, 1-octene, 1-decene and 1-dodecene. Of these, preferable are α-olefins of 4 to 10 carbon atoms, and particularly preferable are α-olefins of 4 to 6 carbon atoms.

It is desired that the ethylene/α-olefin copolymer (a) has a density of 0.925 to 0.940 g/cm$^3$, preferably 0.927 to 0.935 g/cm$^3$, a melt flow rate (MFR, ASTM D 1238-65T, 190 °C, load of 2.16 kg) of 0.1 to 10 g/10 min, preferably 0.1 to 5 g/10 min, more preferably 0.5 to 2 g/10 min, and a molecular weight distribution (Mw/Mn, Mw: weight-average molecular weight, Mn: number-average molecular weight), as measured by GPC, of 1.5 to 3.5, preferably 2.0 to 3.0.

The density is determined in the following manner. Strands obtained in the measurement of melt flow rate at 190 °C under a load of 2.16 kg are heat-treated at 120 °C for 1 hour, then slowly cooled to room temperature over a period of 1 hour and measured on the density by means of a density gradient tube.

The molecular weight distribution (Mw/Mn) is measured in the following manner using GPC-150C manufactured by Millipore Co.

A separatory column of TSK GNH HT having a diameter of 72 mm and a length of 600 mm is used. The column temperature is preset at 140 °C. A sample (concentration: 0.1 % by weight, quantity: 500 microliters) is moved in the column at a rate of 1.0 ml/min using o-dichlorobenzene (available from Wako Junyaku Kogyo K.K.) as a mobile phase and 0.025 % by weight of BHT (available from Takeda Chemical Industries, LTD.) as an antioxidant. A differential refractometer is used as a detector. With regard to standard polystyrenes, polystyrenes available from TOSOH K.K. are used as those of $Mw<1,000$ and $Mw>4\times10^6$, and polystyrenes available from Pressure Chemical Co. are used as those of $1,000<Mw<4\times10^6$.

In the ethylene/α-olefin copolymer (a), the fraction (W (% by weight)) of a n-decane-soluble component at 23 °C is desired to be not more than 1 %, preferably not more than 0.5 %.

The fraction of the n-decane-soluble component (an ethylene/α-olefin copolymer having a small quantity of the n-decane-soluble component has a narrow composition distribution) is determined in the following manner. About 3 g of the ethylene/α-olefin copolymer is added to 450 ml of n-decane, dissolved therein at 145 °C and cooled to 23 °C. The n-decane-insoluble portion is removed by filtration, then the n-decane-soluble portion is recovered from the filtrate, and the quantity of the n-decane-soluble portion is measured.

The outer layer comprising the ethylene/α-olefin copolymer (a) has excellent mechanical properties, so that the thickness of the outer layer of the multi-layer film can be made small, and thereby the multi-layer film can be made lightweight. In the outer layer formed from the ethylene/α-olefin copolymer (a), decrease of a light transmittance with time is extremely small, and therefore if the multi-layer film having such outer layer is used as an agricultural film, the film can be held in the spread state for a long period of time.

The ethylene/α-olefin copolymer (a) can be prepared by copolymerizing ethylene and an α-olefin of 4 to 12 carbon atoms in the presence of a known catalyst, e.g., a metallocene type olefin polymerization catalyst, in such a manner that the resulting copolymer has a density of 0.925 to 0.940 g/cm$^3$.

The ethylene/α-olefin copolymer (a) may be blended with the below-described high-pressure low-density polyethylene (d). The high-pressure low-density polyethylene (d) is used in an amount of 1 to 40 % by weight, preferably 1 to 20 % by weight, based on the total amount of ethylene/α-olefin copolymer (a) and the high-pressure low-density polyethylene (d).

To the ethylene/α-olefin copolymer (a) used for forming the outer layer, other additives than the aforesaid conventional ones (e.g., weathering stabilizer, anti-fogging agent, heat stabilizer), such as the below-described high-pressure low-density polyethylene (d) and inorganic compounds, may be added in amounts not detrimental to the objects of the invention.

High-pressure low-density polyethylene (d)

The high-pressure low-density polyethylene (d) which may be blended with the ethylene/α-olefin copolymer (a) desirably has MFR (ASTM D1238, 190 °C, load of 2.16 kg) of 0.1 to 100 g/10 min, a density of 0.915 to 0.935 g/cm$^3$ and a swell ratio of not more than 60 %.

The density of the high-pressure low-density polyethylene (d) is determined by the same method as used for determining the density of the ethylene/α-olefin copolymer (a). The swell ratio can be determined as follows. A strand obtained in the measurement of melt flow rate is measured on the diameter at the position of 5 mm from the tip of the strand as a diameter of a sample, and the swell ratio of the sample is calculated from the following equation:

$$\text{Swell ratio (\%)} = [(L1/L0)-1] \times 100$$

wherein L1 is a diameter (mm) of the sample and L2 is an orifice diameter (= 2.0955 mm).

The high-pressure low-density polyethylene (d) can be prepared by a conventional high-pressure process.

The high-pressure low-density polyethylene (d) is used in an amount of usually 1 to 40 % by weight, preferably 1 to 20 % by weight, based on 100 % by weight of the total of the ethylene/α-olefin copolymer (a) and the high-pressure low-density polyethylene (d).

The aforesaid ultraviolet light absorber is used in an amount of 0.005 to 5 parts by weight, preferably 0.005 to 2 parts by weight, more preferably 0.01 to 1 part by weight, based on 100 parts by weight of the ethylene/α-olefin copolymer (a) (or based on 100 parts by weight of the total of the ethylene/α-olefin copolymer (a) and the high-pressure low-density polyethylene (d) when the components (a) and (d) are blended).

The light stabilizer is used in an amount of 0.005 to 5 parts by weight, preferably 0.005 to 2 parts by weight, more preferably 0.01 to 1 part by weight, based on 100 parts of the ethylene/α-olefin copolymer (a) (or based on 100 parts by weight of the total of the ethylene/α-olefin copolymer (a) and the high-pressure low-density polyethylene (d) when the components (a) and (d) are blended).

Inorganic compound

Examples of the inorganic compounds (inorganic fillers) include inorganic oxides containing at least one atom selected from Mg, Ca, Al and Si, inorganic hydroxides and hydrotalcites. More specifically, there can be mentioned, $SiO_2$, $Al_2O_3$, MgO, CaO, $Al(OH)_3$, $Mg(OH)_2$, $Ca(OH)_2$ and hydrotalcite. It is desired that the mean particle diameter of the inorganic compound is not greater than 10 μm, preferably not greater than 5 μm, more preferably not greater than 3 μm. When the mean particle diameter of the inorganic compound is in the above range, a multi-layer film having good transparency can be obtained. The inorganic compound is effective as a heat retaining agent. The inorganic compounds can be used singly or in combination of two or more kinds.

The inorganic compound is used in an amount of 1 to 20 parts by weight, preferably 1 to 18 parts by weight, more preferably 2 to 15 parts by weight, based on 100 parts of the ethylene/α-olefin copolymer (a) (or based on 100 parts by weight of the total of the ethylene/α-olefin copolymer (a) and the high-pressure low-density polyethylene (d) when the components (a) and (d) are blended).

Intermediate layer

The ethylene/α-olefin copolymer (b) for forming the intermediate layer is a copolymer of ethylene and an α-olefin of 4 to 12 carbon atoms, and this copolymer is identical with the ethylene/α-olefin copolymer (a) except that the copolymer (b) has a density of 0.880 to 0910 g/cm$^3$, preferably 0.890 to 0.905 g/cm$^3$. If the density of the ethylene/α-olefin copolymer (b) exceeds 0.910 g/cm$^3$ and becomes too high, the resulting film tends to become rigid. Therefore, if the film is used as an agricultural film, spread workability of the film may be bad because of insufficient extensibility, or the spread film occasionally has disadvantages such as creases.

The ethylene/α-olefin copolymer (b) can be prepared by a process similar to the process for preparing the ethylene/α-olefin copolymer (a), specifically, by copolymerizing ethylene and an α-olefin of 4 to 12 carbon atoms in the presence of a metallocene type olefin polymerization catalyst in such a manner that the resulting copolymer has a density of 0.880 to 0.910 g/cm$^3$.

The ethylene/α-olefin copolymer (b) may be blended with the aforesaid high-pressure low-density polyethylene (d).

To the ethylene/α-olefin copolymer (b), known additives, such as weathering stabilizer, anti-fogging agent, inorganic compound and heat stabilizer, may be added in amounts not detrimental to the objects of the invention. The amounts of the high-pressure low-density polyethylene (d) and the additives used are identical with those used for the ethylene/α-olefin copolymer (a).

Inner layer

The inner layer is formed from an ethylene/α-olefin copolymer (c) in an amount of 100 parts by weight, the surface active agent (B) in an amount of 0.01 to 30 parts by weight, preferably 0.05 to 10 parts by weight, more preferably 0.1 to 5 parts by weight, and the functional group-containing organic compound (C) in an amount of 0.01 to 30 parts by weight, preferably 0.05 to 10 parts by weight, more preferably 0.1 to 5 parts by weight.

The ethylene/α-olefin copolymer (c) is a copolymer of ethylene and an α-olefin of 4 to 12 carbon atoms which may have a branch, and this copolymer is identical with the ethylene/α-olefin copolymer (a) except that the copolymer (c) has a density of 0.905 to 0930 g/cm$^3$, preferably 0.910 to 0.920 g/cm$^3$.

If the density of the ethylene/α-olefin copolymer (c) is lower than 0.905 g/cm$^3$ and becomes too low, the inner surface tackiness of the resulting film becomes high. Therefore, if the film is used as an agricultural film for a pipe house, slippage of the film on pipes of the pipe house becomes bad to impair spread workability.

The ethylene/α-olefin copolymer (c) can be prepared by a process similar to the process for preparing the ethylene/α-olefin copolymer (a), specifically, by copolymerizing ethylene and an α-olefin of 4 to 12 carbon atoms in the presence of a metallocene tape olefin polymerization catalyst in such a manner that the resulting copolymer has a density of 0.905 to 0.930 g/cm$^3$.

The ethylene/α-olefin copolymer (c) may be blended with the aforesaid high-pressure low-density polyethylene (d).

In each of the above-mentioned layers of the multi-layer film, the aforesaid various additives may be contained in amounts not detrimental to the objects of the invention.

The multi-layer film is favorable as an agricultural film, and is superior to the conventional agricultural (multi-layer) films not only in the anti-fogging properties but also in the dust proofness and toughness. Further, since the multi-layer film is lightweight and uses a polymer having a low content of a low-molecular weight component, the film has advantages such that surface tackiness is low, spread workability is good, and fusion bonding of films at high temperatures rarely occurs.

The multi-layer film exerts the above-mentioned effects, and therefore if the film is spread to form an agricultural or horticultural structure such as house or tunnel, the film can be utilized for cultivation of useful crops over a Long period of time.

There is no specific limitation on the manner of spreading the multi-layer film, but in the preferred embodiment of the invention, the multi-layer film is spread so that the outer layer side surface is exposed to the outside air and the inner layer side surface faces the inside of house, tunnel or the like, namely, the cultivated crop.

Preparation of multi-layer film

If the film of the invention is the above-mentioned multi-layer film, the multi-layer film can be prepared by, for example, the following process. The thermoplastic resin and the additives for forming each layer of the film are mixed, and the mixture is melt kneaded by a Banbury mixer, a roll mill, an extruder or the like. Then, through a co-extrusion inflation method or a co-extrusion T-die method, the mixtures for plural layers are extruded and laminated so that the resulting film has a layer structure of outer layer/intermediate layer/inner layer. The resulting film may be stretched, if necessary.

Masterbatch

When the thermoplastic resin composition of the invention is used as masterbatch, the surface active agent (B) is desirably used in an amount of 2 to 30 parts by weight, preferably 5 to 30 parts by weight, based on 100 parts by weight of the thermoplastic resin (A), and the functional group-containing organic compound (C) is desirably used in an amount of 2 to 30 parts by weight, preferably 5 to 30 parts by weight, based on 100 parts by weight of the thermoplastic resin (A).

The masterbatch containing the surface active agent (B) and the functional group-containing organic compound (C) in such high concentrations as above is blended with, for example, a thermoplastic resin component containing neither antistatic agent nor anti-fogging agent or a thermoplastic resin component containing an antistatic agent and an anti-fogging agent in low concentrations.

For preparing the masterbatch, any of conventional methods is available. For example, the masterbatch can be prepared by melt kneading the thermoplastic resin (A), the surface active agent (B) and the functional group-containing organic compound (C) by the use of an extruder, a kneader or the like.

In the preparation of the masterbatch, the aforesaid additives may be used, if necessary, in amounts not detrimental to the objects of the invention.

In order to prepare a thermoplastic resin composition by adding the masterbatch to a thermoplastic resin component, any of conventional methods is available. For example, the composition can be prepared by melt kneading the masterbatch and the thermoplastic resin component by the use of an extruder, a kneader or the like.

If the masterbatch is used, the kneading operation can be carried out more easily and the dispersibility is more highly improved, as compared with the case of directly mixing the thermoplastic resin (A), the surface active agent (B) and the functional group-containing organic compound (C) with each other.

## EFFECT OF THE INVENTION

The thermoplastic resin composition according to the invention comprises the thermoplastic resin, the surface active agent and the specific functional group-containing organic compound. Therefore, if the composition is molded into various molded products such as films, the molded products exhibit antistatic properties and anti-fogging properties immediately after the molded products are produced, and those products retain stable properties over a long period of time.

The film according to the invention comprises the thermoplastic resin composition or has at least one layer comprising the thermoplastic resin composition. This film exhibits antistatic properties and anti-fogging properties immediately after the film is produced and is superior to the conventional films in retention of the ant-fogging properties and the antistatic properties.

## EXAMPLE

The present invention is further described with reference to the following examples, but it should be construed that the invention is in no way limited to those examples.

### Evaluation on anti-fogging properties of multi-layer film

In the examples and the comparative examples, the anti-fogging properties of the multi-layer films were evaluated in the following manner.

A pipe house (frontage: 5.4 m, depth: 20 m) set up in an experimental field of Mitsui Petrochemical Co., Ltd. in Otake-shi, Hiroshima prefecture, was covered with the multi-layer film, and the spreading test was carried out for three years from September, 1993 to September, 1996. During the test period, water spraying was made almost every week to keep moisture content in the house. After a given period of time, water droplets on the inner surface of the film were observed. The anti-fogging properties of the film were evaluated based on the following three criteria.

### Evaluation criteria

○ : Water droplets run on the surface or the film, and no water droplet remaining on the surface is observed.
△ : Large water droplets are observed on some parts of the surface of the film.
X : Fine water droplets are observed on the whole surface of the film.

### Preparation Example 1

### Preparation of ethylene/1-hexene copolymer

### Preparation of olefin polymerization catalyst

In 80 liters of toluene, 5.0 kg of silica dried at 250 °C for 10 hours was suspended, and the suspension was cooled to 0 °C. To the suspension, 28.7 liters of a toluene solution of methylaluminoxane (Al: 1.33 mol/l) was dropwise added over a period of 1 hour. During the dropwise addition, the temperature of the system was maintained at 0 °C. The reaction was conducted at 0 °C for 60 minutes. Then, the temperature of the system was raised up to 95 °C over a period of 1.5 hours, and at this temperature the reaction was conducted for 20 hours. The temperature of the system was then lowered to 60 °C, and the supernatant liquid was removed by decantation.

The resulting solid was washed twice with toluene and resuspended in 80 liters of toluene. To the system, 7.4 liters of a toluene solution of bis(1,3-n-butylmethylcyclopentadienyl)zirconium dichloride (Zr: 34.0 mmol/l) and 1.0 liter of a toluene solution of bis(1,3-dimethylcyclopentadienyl)zirconium dichloride (Zr: 28.1 mmol/l) were dropwise added at 80 °C over a period of 30 minutes. The reaction was further conducted at 80 °C for 2 hours. Then, the supernatant liquid

was removed, and the remainder was washed twice with hexane to obtain a solid catalyst containing 3.6 mg of zirconium per 1 g of the catalyst.

Preparation of prepolymerized catalyst

To 85 liters of hexane containing 1.7 mol of triisobutylaluminum, 0.85 kg of the solid catalyst obtained above and 255 g of 1-hexene were added, and prepolymerization of ethylene was performed at 35 °C for 12 hours to obtain a prepolymerized catalyst containing polyethylene produced by prepolymerization in an amount of 10 g per 1 g of the solid catalyst. This ethylene polymer had an intrinsic viscosity [η] of 1.74 dl/g.

Polymerization

In two of continuous type fluidized bed gas phase polymerization reactors connected in series, copolymerization of ethylene and 1-hexene was carried out in the presence of the above-obtained prepolymerized catalyst, to prepare an ethylene/1-hexene copolymer (i).

The ethylene/1-hexene copolymer (i) had a 1-hexene content of 7.5 % by weight, a density of 0.928 g/cm$^3$, MFR (ASTM D 1238-65T, 190 °C, load of 2.16 kg) of 1.63 g/10 min, a weight-average molecular weight, as measured by GPC, of 79,000 and a molecular weight distribution (Mw/Mn) of 3.5.

The fraction [W] of the n-decane-soluble component in the copolymer at room temperature was 0.25 % by weight.

The results are set forth in Table 1.

Preparation Example 2

An ethylene/1-hexene copolymer (ii) was prepared in the same manner as in Preparation Example 1.

The ethylene/1-hexene copolymer (ii) had a 1-hexene content of 13.5 % by weight, a density of 0.908 g/cm$^3$, MFR (ASTM D 1238-65T, 190 °C, load of 2.16 kg) of 1.95 g/10 min, a weight-average molecular weight, as measured by GPC, of 75,000 and a molecular weight distribution (Mw/Mn) of 3.0.

The fraction [W] of the n-decane-soluble component in the copolymer at room temperature was 0.54 % by weight.

The results are set forth in Table 1.

Table 1

| | Polymer | Density g/cm$^3$ | MFR g/10 min. | Mw/Mn | Mw | W wt % | Monomer | | Swell Ratio |
|---|---|---|---|---|---|---|---|---|---|
| | | | | | | | Kind | Content wt. % | |
| Prep. Ex. 1 | i | 0.928 | 1.63 | 3.5 | 79000 | 0.25 | 1-hexene | 7.5 | - |
| Prep. Ex. 2 | ii | 0.908 | 1.95 | 3.0 | 75000 | 0.54 | 1-hexene | 13.5 | - |
| High-pressure low-density polyethylene | iii | 0.923 | 0.51 | - | 86000 | - | - | - | 40 |

Examples A1 - A11, Comparative Example A1

The resins shown in Table 1 were subjected to inflation molding under the following conditions to produce three-layer films whose layer structure, layer composition and layer thickness are shown in Table. 3-1 to Table. 3-3.

The films were evaluated on the anti-fogging properties. The results are set forth in Table 4-1 and Table 4-2.

Inflation molding conditions

Molding machine: three-layer molding machine manufactured by Arpine Co.

Die diameter: 400 mm
Molding temperature: 200 °C
Spread width: 1,500 mm

Compounding ingredients

Surface active agent (anti-fogging agent): mixture of glycerol monostearate (20 %), diglycerol mono and distearate (60 %) and polyoxyethylene sorbitan mono and distearate (20 %)
Weathering stabilizer: Kimasoap 944™ (available from Ciba-Geigy Corporation, HALS type stabilizer)
Hydrotalcite: DHT-4A (available from Kyowa Kagaku K.K.)
Rosin ester (anti-fogging agent migration controlling agent):

(R-1) pentaerythritol ester of rosin acid represented by the following formula (Iaa) (triester 25 %, tetraester 75 %)

In the rosin ester (R-1), an ester group was present as a functional group; a difference between an atomic charge Ea of an atom a (C) and an atomic charge Eb of an atom b (O) for constituting the (C=O) bond of the ester group, |Ea-Eb|, was 0.593e; and the content of the ester group (functional group) in the rosin ester (R-1) was 3.14 mmol/g.

(R-2): glycerol triester of rosin acid represented by the following formula (Iaa)

In the rosin ester (R-2), an ester group was present as a functional group; a difference between an atomic charge Ea of an atom a (C) and an atomic charge Eb of an atom b (O) for constituting the (C=O) bond of the functional group, |Ea-Eb|, was 0.593e; and the content of the functional group in the rosin ester (R-2) was 3.20 mmol/g.

The difference between the atomic charges of the constituent atoms of the functional group in the rosin ester and the content of the functional group in the compound are set forth in Table 2.

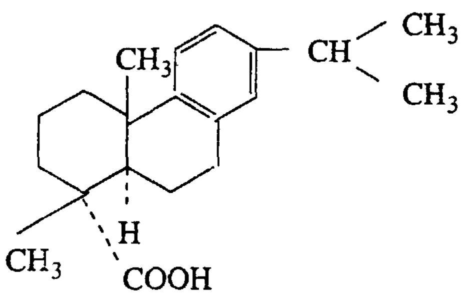

(Iaa)

Table 2

| Difference between atomic charges of functional group-constituting atoms and content of functional group in compound | | | | |
|---|---|---|---|---|
| Compound | Constituent atom of functional group | Difference between atomic charges (e) | Preparation Example No. | Content of functional group in compound (mmol/g) |
| Modified polyolefin | C = O (carboxylic anhydride) | 0.548 | W-3 | 0.61 |
| | | | W-4 | 1.02 |
| | C - O (carboxylic anhydride) | 0.544 | W-3 | 0.31 |
| | | | W-4 | 0.52 |

Table 2 (continued)

| Difference between atomic charges of functional group-constituting atoms and content of functional group in compound | | | | |
|---|---|---|---|---|
| Compound | Constituent atom of functional group | Difference between atomic charges (e) | Preparation Example No. | Content of functional group in compound (mmol/g) |
| Oxydized poly-olefin | C = O (carboxylic acid) | 0.593 | W-5 | 0.36 |
| | | | W-6 | 0.18 |
| | C = O (ketone) | 0.413 | W-5 | 0.71 |
| | | | W-6 | 0.36 |
| | O - H (Carboxylic acid) | 0.513 | W-5 | 0.36 |
| | | | W-6 | 0.18 |
| | O - H (Alcohol) | 0.521 | W-5 | 0.71 |
| | | | W-6 | 0.36 |
| Rosin ester | C = O (Ester) | 0.593 | R-1 | 3.14 |
| | | | R-2 | 3.20 |
| Hydrocarbon resin | C - H (Styrene $\alpha$-position | 0.255 | W-1 | 8.3 |
| | | | W-2 | 7.5 |

Table 3-1 (I)

| Amount of ingredient (wt %) | Ex. A1 | Ex. A2 | Ex. A3 | Ex. A4 | Ex. A5 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 3.0 | 3.0 | 3.0 | 0 | 0 |
| Surface active agent (b) | 0 | 0 | 0 | 3.0 | 3.0 |
| Rosin ester | | | | | |
| type | R-1 | R-2 | R-2 | R-1 | R-2 |
| amount | 1.0 | 0.5 | 2.0 | 1.0 | 0.5 |
| Weathering stabilizer | 0.1 | 0.1 | 0.1 | 0.1 | 0.1 |
| Hydrotalcite | 0 | 0 | 0 | 0 | 0 |
| Anti-fogging agent | 0 | 0 | 0 | 0.1 | 0.1 |
| Ultraviolet light absorber | 0 | 0 | 0 | 0 | 0 |
| Layer thickness (μm) | 20 | 20 | 20 | 20 | 20 |
| **Intermediate layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 2.0 | 2.0 | 2.0 | 0 | 0 |
| Surface active agent (b) | 0 | 0 | 0 | 2.0 | 2.0 |
| Rosin ester | | | | | |
| type | - | - | - | - | - |
| amount | 0 | 0 | 0 | 0 | 0 |
| Weathering stabilizer | 0.2 | 0.2 | 0.2 | 0.2 | 0.2 |
| Hydrotalcite | 7.0 | 7.0 | 7.0 | 10.0 | 10.0 |
| Anti-fogging agent | 0 | 0 | 0 | 0.1 | 0.1 |
| Ultraviolet light absorber | 0 | 0 | 0 | 0 | 0 |
| Layer thickness (μm) | 60 | 60 | 60 | 60 | 60 |

Table 3-1 (II)

| Amount of ingredient (wt %) | Ex. A1 | Ex. A2 | Ex. A3 | Ex. A4 | Ex. A5 |
|---|---|---|---|---|---|
| **Outer layer** | | | | | |
| Resin compounding ratio (wt/wt) | i/iii =85/15 | i/iii =85/15 | i/iii =85/15 | i/iii =85/15 | i/iii =85/15 |
| Surface active agent (a) | 1.0 | 1.0 | 1.0 | 0 | 0 |
| Surface active agent (b) | 0 | 0 | 0 | 2.0 | 2.0 |
| Rosin ester | | | | | |
| type | - | - | - | - | - |
| amount | 0 | 0 | 0 | 0 | 0 |
| Weathering stabilizer | 0.2 | 0.2 | 0.2 | 0.2 | 0.2 |
| Hydrotalcite | 3.0 | 3.0 | 3.0 | 3.0 | 3.0 |
| Anti-fogging agent | 0 | 0 | 0 | 0 | 0 |
| Ultraviolet light absorber | 0 | 0 | 0 | 0 | 0 |
| Layer thickness (μm) | 20 | 20 | 20 | 20 | 20 |

Table 3-2 (I)

| Amount of ingredient (wt %) | Ex. A6 | Ex. A7 | Ex. A8 | Ex. A9 | Ex.A10 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 0 | 0 | 0 | 0 | 0 |
| Surface active agent (b) | 3.0 | 3.0 | 3.0 | 3.0 | 3.0 |
| Rosin ester | | | | | |
| type | R-2 | R-2 | R-2 | R-2 | R-2 |
| amount | 2.0 | 2.0 | 2.0 | 2.0 | 2.0 |
| Weathering stabilizer | 0.1 | 0.1 | 0.1 | 0.1 | 0.1 |
| Hydrotalcite | 0 | 0 | 0 | 0 | 0 |
| Anti-fogging agent | 0.1 | 0.1 | 0.1 | 0.1 | 0.1 |
| Ultraviolet light absorber | 0 | 0.2 | 0 | 0 | 0 |
| Layer thickness (μm) | 20 | 20 | 26 | 30 | 20 |
| **Intermediate layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 0 | 0 | 0 | 0 | 0 |
| Surface active agent (b) | 2.0 | 2.0 | 2.0 | 2.0 | 2.0 |
| Rosin ester | | | | | |
| type | - | - | - | - | - |
| amount | 0 | 0 | 0 | 0 | 0 |
| Weathering stabilizer | 0.2 | 0.2 | 0.2 | 0.2 | 0.2 |
| Hydrotalcite | 10.0 | 10.0 | 10.0 | 10.0 | 10.0 |
| Anti-fogging agent | 0.1 | 0.1 | 0.1 | 0.1 | 0.1 |
| Ultraviolet light absorber | 0 | 2.5 | 0 | 0 | 0 |
| Layer thickness (μm) | 60 | 60 | 78 | 90 | 60 |

Table 3-2 (II)

| Amount of ingredient (wt %) | Ex. A6 | Ex. A7 | Ex. A8 | Ex. A9 | Ex.A10 |
|---|---|---|---|---|---|
| **Outer layer** | | | | | |
| Resin compounding ratio (wt/wt) | i/iii =85/15 | i/iii =85/15 | i/iii =85/15 | i/iii =85/15 | i/iii =85/15 |
| Surface active agent (a) | 0 | 0 | 0 | 0 | 0 |
| Surface active agent (b) | 2.0 | 2.0 | 2.0 | 2.0 | 3.0 |
| Rosin ester | | | | | |
| type | - | - | - | - | R-2 |
| amount | 0 | 0 | 0 | 0 | 2.0 |
| Weathering stabilizer | 0.2 | 0.2 | 0.2 | 0.2 | 0.2 |
| Hydrotalcite | 3.0 | 3.0 | 3.0 | 3.0 | 3.0 |
| Anti-fogging agent | 0 | 0 | 0 | 0 | 0 |
| Ultraviolet light absorber | 0 | 2.5 | 0 | 0 | 0 |
| Layer thickness (μm) | 20 | 20 | 26 | 30 | 20 |

Table 3-3 (I)

| Amount of ingredient (wt %) | Ex. A11 | Compar. Ex. A1 |
|---|---|---|
| **Inner layer** | | |
| Resin compounding ratio (wt/wt) | ii/iii =85/15 | ii/iii =85/15 |
| Surface active agent (a) | 0 | 3.0 |
| Surface active agent (b) | 3.0 | 0 |
| Rosin ester | | |
| type<br>amount | R-2<br>2.0 | -<br>0 |
| Weathering stabilizer | 0.1 | 0.1 |
| Hydrotalcite | 0 | 0 |
| Anti-fogging agent | 0.1 | 0 |
| Ultraviolet light absorber | 0 | 0 |
| Layer thickness (μm) | 20 | 20 |
| **Intermediate layer** | | |
| Resin compounding ratio (wt/wt) | ii/iii =85/15 | ii/iii =85/15 |
| Surface active agent (a) | 0 | 2.0 |
| Surface active agent (b) | 2.0 | 0 |
| Rosin ester | | |
| type<br>amount | R-2<br>2.0 | -<br>0 |
| Weathering stabilizer | 0.2 | 0.2 |
| Hydrotalcite | 10.0 | 7.0 |
| Anti-fogging agent | 0.1 | 0 |
| Ultraviolet light absorber | 0 | 0 |
| Layer thickness (μm) | 60 | 60 |

Table 3-3 (II)

| Amount of ingredient (wt %) | Ex. A11 | Compar. Ex. A1 |
|---|---|---|
| **Outer layer** | | |
| Resin compounding ratio (wt/wt) | i/iii =85/15 | i/iii =85/15 |
| Surface active agent (a) | 0 | 1.0 |
| Surface active agent (b) | 3.0 | 0 |
| Rosin ester | | |
| type | R-2 | - |
| amount | 2.0 | 0 |
| Weathering stabilizer | 0.2 | 0.2 |
| Hydrotalcite | 3.0 | 3.0 |
| Anti-fogging agent | 0 | 0 |
| Ultraviolet light absorber | 0 | 0 |
| Layer thickness (μm) | 20 | 20 |

Table 4-1

| Anti-fogging properties | Examples | | | | | |
|---|---|---|---|---|---|---|
| | A1 | A2 | A3 | A4 | A5 | A6 |
| Initial state | ○ | ○ | ○ | ○ | ○ | ○ |
| 0.5 year | ○ | ○ | ○ | ○ | ○ | ○ |
| 1.0 year | ○ | ○ | ○ | ○ | ○ | ○ |
| 1.5 years | ○ | ○ | ○ | ○ | ○ | ○ |
| 2.0 years | ○ | ○ | ○ | ○ | ○ | ○ |
| 2.5 years | ○ | ○ | ○ | ○ | ○ | ○ |
| 3.0 years | ○ | △ | ○ | ○ | ○ | ○ |

Table 4-2

| Anti-fogging properties | Examples | | | | | Compar. Example |
|---|---|---|---|---|---|---|
| | A7 | A8 | A9 | A10 | A11 | A1 |
| Initial state | ○ | ○ | ○ | ○ | ○ | ○ |
| 0.5 year | ○ | ○ | ○ | ○ | ○ | ○ |
| 1.0 year | ○ | ○ | ○ | ○ | ○ | ○ |
| 1.5 years | ○ | ○ | ○ | ○ | ○ | △ |
| 2.0 years | ○ | ○ | ○ | ○ | ○ | △ |
| 2.5 years | ○ | ○ | ○ | ○ | ○ | X |
| 3.0 years | ○ | △ | ○ | ○ | ○ | X |

The multi-layer or single-layer films in the following examples and comparative examples were measured on the moldability, initial anti-fogging properties and retention of anti-fogging properties in the following manner and evaluated based on the following criteria.

Moldability of multi-layer or single-layer film

Evaluation criteria

○ : Stable bubbles were formed, and an excellent film of a uniform thickness was obtained.
△ : A film was produced, but the film had an ununiform thickness.
X : Bubbles were unstable, and no film was able to be produced.

Initial anti-fogging properties

Into a 100 cc beaker, 70 cc of water was introduced, and the top of the beaker was covered with a sample film in such a manner that the inner layer of the film faced down. The beaker was placed in a constant temperature water bath at 50 °C and allowed to stand in a constant temperature room at 20 °C. After 24 hours, fogging of the inner surface of the sample film was observed, and the film was evaluated based on the following criteria.

Evaluation criteria

○ : Water droplets run on the surface of the film, and no water droplet remaining on the surface is observed.
△ : Large water droplets are observed on some parts of the surface of the film.
X : Fine water droplets are observed on the whole surface of the film.

Retention of anti-fogging properties

A sample film was immersed in hot water at 60 °C. After 40 days, the film was taken out of the hot water and dried. Then, the film was evaluated on the 24 hr-later anti-fogging properties in the same manner as described above.

In the following examples and comparative examples, a hydrocarbon resin (W-1), a hydrocarbon resin (W-2), a modified polyolefin (W-3), a modified polyolefin (W-4), an oxidized polyolefin (W-5), an oxidized polyolefin (W-6), carnauba wax (W-7) (natural wax) and montan wax (W-8) (natural wax) were used as the functional group-containing organic compounds (anti-fogging agent migration controlling agent).

The hydrocarbon resins, the modified polyolefins and the oxidized polyolefins were synthesized by the processes described below.

As the carnauba wax (W-7), "Carnauba Wax No. 2" (trade name, available from Kato Yoko K.K., molecular weight: 820, type of functional group: ester group, content of functional group: 1.2 mmol/g) was used.

As the montan wax (W-8), "Hoechst Wax E" (trade name, available from Hoechst Industry, molecular weight: 800, type of functional group: ester group, content of functional group: 2.5 mmol/g) was used.

Preparation Example 3

Synthesis of functional group-containing organic compound

Synthesis of hydrocarbon resin (1)

An autoclave was charged with 100 g of isopropenyltoluene (purity: 99.2 %) obtained from an acid decomposition product of cymene hydroperoxide through distillation separation in the cresol preparation process of the cymene method, 10 g of a C4, C5 fraction obtained by thermal decomposition of petroleum naphtha and containing unsaturated hydrocarbon, and 150 g of toluene. To the system, 0.3 g of a $BF_3$ phenol complex was dropwise added as a catalyst over a period of about 10 minutes, with stirring and maintaining the temperature at 0 °C. Thereafter, the mixture was further stirred for another 3 hours. Then, 50 ml of a 5 wt% sodium hydroxide aqueous solution was added, and the mixture was vigorously stirred for 30 minutes to decompose the catalyst. The aqueous phase was removed, and the polymerization oil was washed with water until it became neutral. Then, the unreacted oil and the solvent (toluene) were removed by vacuum distillation under heating, to obtain a white massive hydrocarbon resin (referred to as "W-1" hereinafter).

Compositions of the starting monomers are as follows.

| Composition of isopropenyltoluene | |
|---|---|
| Ortho-isopropenyltoluene | 5.3 % by weight |
| Meta-isopropenyltoluene | 60.4 % by weight |
| Para-isopropenyltoluene | 33.5 % by weight |
| Cymene | 0.8 % by weight |
| Total | 100 % by weight |

| Composition of C4, C5 fraction | |
|---|---|
| C3 | 1.5 % by weight |
| Isobutane | 0.4 % by weight |
| n-Butane | 1.3 % by weight |
| 1-Butene | 10.5 % by weight |
| Isobutylene | 19.8 % by weight |
| Trans-2-butene | 8.7 % by weight |
| Cis-2-butene | 4.4 % by weight |
| 1,3-Butadiene | 20.9 % by weight |
| n-Pentane | 5.1 % by weight |
| Isoprene | 5.6 % by weight |
| 1,3-Pentadiene | 2.8 % by weight |
| Cyclopentadiene | 3.1 % by weight |
| Others (fractions having boiling point of not higher than 80 °C) | 15.9 % by weight |
| Total | 100 % by weight |

The hydrocarbon resin W-1 obtained above had a softening point of 96 °C and a weight-average molecular weight of 1,310.

In the hydrocarbon resin W-1, a benzene ring derived from isopropenyltoluene was present as a functional group; a difference between an atomic charge Ea of an atom a (C) and an atomic charge Eb of an atom b (H) in the (C-H) bond at the styrene $\alpha$-position of the benzene ring, |Ea-Eb|, was 0.255e; and the content of the functional group (benzene ring) in the hydrocarbon resin was 8.3 mmol/g.

The difference between the atomic charges of the constituent atoms of the functional group in the hydrocarbon resin W-1 and the content of the functional group in the compound are set forth in Table 2.

<u>Preparation Example 4</u>

<u>Synthesis of hydrocarbon resin (2)</u>

To an autoclave (actual capacity: 1,270 ml) equipped with an stirring blade, isopropenyltoluene, indene, dehydrated and purified toluene and a boron trifluoride phenolate complex (phenol: 1.6 times equivalents) diluted with dehydrated and purified toluene in a dilution of 10 times were continuously fed in such a manner that the proportion of the isopropenyltoluene, the indene and the dehydrated and purified toluene was 50 g:50 g:100 g (isopropenyltoluene:indene:toluene) and that the feed rate of the total thereof became 1.0 liter/hr, to perform polymerization reaction at a reaction temperature of 5 °C. Subsequently, the reaction mixture was transferred into an autoclave of the second stage to continue the polymerization reaction at 5 °C. When the total residence time in the autoclaves of the first and the second stages became 2 hours, the reaction mixture was continuously discharged. When a period of time 3 times as much as that of the residence time passed, the polymerization operation was stopped. Then, a 1N NaOH aqueous solution was added to the reaction mixture to terminate the reaction. The reaction mixture obtained was washed 5 times with a large amount of water, and the solvent and the unreacted monomers were removed under reduced pressure by means of an evaporator to obtain a hydrocarbon resin (referred to as "W-2" hereinafter).

The hydrocarbon resin W-2 had a softening point of 152 °C and a weight-average molecular weight of 2,105.

In the hydrocarbon resin W-2, a benzene ring derived from isopropenyltoluene and a benzene ring derived from indene were present as functional groups; a difference between an atomic charge Ea of an atom a (C) and an atomic charge Eb of an atom b (H) in the (C-H) bond at the styrene unit $\alpha$-position, |Ea-Eb|, was 0.255e; and the content of the functional group in the compound was 7.5 mmol/g.

The difference between the atomic charges of the constituent atoms of the functional group in the hydrocarbon resin W-2 and the content of the functional group in the compound are set forth in Table 2.

Preparation Example 5

Synthesis of modified polyolefin (1)

600 Grams of a high-density polyethylene wax having an intrinsic viscosity [$\eta$] of 0.13 dl/g was introduced into a 1.5-liter glass reactor and melted under heating at 160 °C. Then, 19 g of maleic anhydride and 4 g of di-tert-butyl peroxide were dropwise added over a period of 3 hours, with maintaining the system at the same temperature. After the dropwise addition was completed, the mixture was further reacted for 1 hour. The mixture in the molten state was subjected to deaeration in vacuo at 10 mmHg over a period of 1 hour to remove volatile components, and then cooled to room temperature to obtain a modified polyolefin (referred to as "W-3" hereinafter). The modified polyolefin W-3 had an intrinsic viscosity [$\eta$] of 0.16 dl/g and a graft modification degree with maleic anhydride of 2.9 % by weight.

In the modified polyolefin W-3, a functional group (carboxylic anhydride group) derived from maleic anhydride was present; a difference between atomic charges of atoms in the (C=O) bond of the functional group (carboxylic anhydride group), |Ea-Eb|, was 0.548e; and the content of the functional group in the modified polyolefin was 0.61 mmol/g.

Further, a difference between atomic charges of atoms in the (C-O) bond of the functional group (carboxylic anhydride group) derived from maleic anhydride, |Ea-Eb|, was 0.544e; and the content of the functional group in the modified polyolefin was 0.31 mmol/g. The modified polyolefin had a weight-average molecular weight (Mw) of 4,300.

The difference between the atomic charges of the constituent atoms of each functional group in the modified polyolefin W-3 and the content of each functional group in the compound are set forth in Table 2.

Preparation Example 6

Synthesis of modified polyolefin (2)

744 Grams of high-density polyethylene having an intrinsic viscosity [$\eta$] of 1.27 dl/g and 5,700 ml of toluene were introduced into a 15-liter stainless steel autoclave and melted under heating at 160 °C. Then, a solution of 44.7 g of maleic anhydride in 250 ml of toluene and a solution of 3.54 g of dicumyl peroxide in 50 ml of toluene were dropwise added over a period of 3 hours, with maintaining the system at the same temperature. After the dropwise addition was completed, the mixture was further reacted for 1 hour and then cooled to room temperature to precipitate a modified polyolefin (referred to as "W-4" hereinafter). The modified polyolefin precipitated was washed several times with acetone and dried. The resulting modified polyolefin W-4 had an intrinsic viscosity [$\eta$] of 1.31 dl/g and a graft modification degree with maleic anhydride of 2.3 % by weight.

In the modified polyolefin W-4, a functional group (carboxylic anhydride group) derived from maleic anhydride was present; a difference between an atomic charge Ea of an atom a (C) and an atomic charge Eb of an atom b (O) in the (C=O) bond of the functional group, |Ea-Eb|, was 0.548e; and the content of the functional group in the modified polyolefin was 1.02 mmol/g.

Further, a difference between atomic charges of atoms in the (C-O) bond of the functional group (carboxylic anhydride group) derived from maleic anhydride, |Ea-Eb|, was 0.544e; and the content of the functional group in the modified polyolefin was 0.52 mmol/g.

The modified polyolefin had a weight-average molecular weight (Mw) of 4,800.

The difference between the atomic charges of the constituent atoms of each functional group in the modified polyolefin W-4 and the content of each functional group in the compound are set forth in Table 2.

Preparation Example 7

Synthesis of oxidized polyolefin (1)

800 Grams of a high-density polyethylene wax having an intrinsic viscosity [η] of 0.13 dl/g and an acid value of 0 mgKOH/g was introduced into a 1.5-liter glass reactor and melted under heating at 160 °C. Then, air was blown into the molten wax at a rate of 4.5 l/min to perform oxidation reaction. After a lapse of 5 hours, the reaction was completed, and the system was cooled to room temperature to obtain an oxidized polyolefin (referred to as "W-5" hereinafter). The oxidized polyolefin had an intrinsic viscosity [η] of 0.13 dl/g and an acid value of 1 mgKOH/g.

In the oxidized polyolefin W-5, a functional group (carboxyl group) derived from a carboxylic acid was present; a difference between an atomic charge Ea of an atom a (C) and an atomic charge Eb of an atom b (O) in the (C=O) bond of the functional group, |Ea-Eb|, was 0.593e; and the content of the functional group in the oxidized polyolefin was 0.36 mmol/g.

Further, a functional group (carbonyl group) derived from ketone was present; a difference between atomic charges of atoms in the (C=O) bond of the functional group, |Ea-Eb|, was 0.413e; and the content of the functional group was 0.71 mmol/g.

Furthermore, a difference between atomic charges of atoms in the (O-H) bond of a functional group (hydroxyl group) derived from a carboxylic acid, |Ea-Eb|, was 0.513e; and the content of the functional group was 0.56 mmol/g.

Furthermore, a difference between atomic charges of atoms in the (O-H) bond of a functional group derived from alcohol, |Ea-Eb|, was 0.521e; and the content of the functional group was 0.71 mmol/g.

The oxidized polyolefin had a weight-average molecular weight (Mw) of 3,300.

The difference between the atomic charges of the constituent atoms of each functional group in the modified polyolefin W-5 and the content of each functional group in the compound are set forth in Table 2.

Preparation Example 8

Synthesis of oxidized polyolefin (2)

600 Grams of a high-density polyethylene wax having an intrinsic viscosity [η] of 0.21 dl/g and an acid value of 0 mgKOH/g was introduced into an autoclave equipped with a constant pressure valve and melted under heating at 160 °C. Then, air was blown into the molten wax at a rate of 1.05 l/min to perform oxidation reaction, with maintaining the internal pressure of the autoclave at 6.5 kg/cm$^2$. After a lapse of 7.5 hours, the reaction was completed, and the system was cooled to room temperature to obtain an oxidized polyolefin (referred to as "W-6" hereinafter). The oxidized polyolefin had an intrinsic viscosity [η] of 0.16 dl/g and an acid value of 17 mgKOH/g.

In the oxidized polyolefin W-6, a functional group (carboxyl group) derived from a carboxylic acid was present; a difference between an atomic charge Ea of an atom a (C) and an atomic charge Eb of an atom b (O) in the (C=O) bond of the functional group, |Ea-Eb|, was 0.593e; and the content of the functional group in the oxidized polyolefin was 0.18 mmol/g.

Further, a functional group (carbonyl group) derived from ketone was present; a difference between atomic charges of atoms in the (C=O) bond of the functional group, |Ea-Eb|, was 0.413e; and the content of the functional group was 0.36 mmol/g.

Furthermore, a difference between atomic charges of atoms in the (O-H) bond of a functional group (hydroxyl group) derived from a carboxylic acid, |Ea-Eb|, was 0.513e; and the content of the functional group was 0.18 mmol/g.

Furthermore, a difference between atomic charges of atoms in the (O-H) bond of a functional group (hydroxyl group) derived from alcohol, |Ea-Eb|, was 0.521e; and the content of the functional group was 0.36 mmol/g.

The oxidized polyolefin had a weight-average molecular weight (Mw) of 5,410.

The difference between the atomic charges of the constituent atoms of each functional group in the modified polyolefin W-6 and the content of each functional group in the compound are set forth in Table 2.

Examples B1 - B35, Comparative Examples B1 and B2

The resins shown in Table 1 were subjected to inflation molding under the following conditions to produce three-layer films or single-layer films (films having inner layer only) shown in Table 5-1 to Table 5-8. The films were evaluated on the moldability and the anti-fogging properties. The results are set forth in Table 6-1 to Table 6-4.

Inflation molding conditions

Molding machine: three-layer molding machine available from Arpine Co.

Die diameter: 400 mm
Molding temperature: 200 °C
Spread width: 1,500 mm

Compositions and trade names of the compounding ingredients shown in the tables are as follows.

(1) Surface active agent (a): mixture of glycerol mcnostearate (20 %), diglycerol mono and distearate (60 %), and polyoxyethylene sorbitan mono and distearate (20 %)
(2) Surface active agent (b): mixture of glycerol monostearate (25 %), diglycerol stearate (70 %) and diethanolstearylamine (5 %)
(3) Weathering stabilizer: Kimasoap 944™ (available from Ciba-Geigy Corporation, HALS type stabilizer)
(4) Hydrotalcite: DHT-4A (available from Kyowa Kagaku K.K.)
(5) Anti-fogging agent: fluorine-containing surface active agent, KC-14 (available from Asahi Glass Co., Ltd.)
(6) Ultraviolet light absorber: benzotriazole type (or benzophenone type) (available from Ciba-Geigy Corporation)

Table 5-1 (I)

| Amount of ingredient (wt %) | Ex. B1 | Ex. B2 | Ex. B3 | Ex. B4 | Ex. B5 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 3.0 | 3.0 | 3.0 | 3.0 | 3.0 |
| Surface active agent (b) | 0 | 0 | 0 | 0 | 0 |
| Functional group-containing organic compound | | | | | |
| type | W-1 | W-2 | W-2 | W-3 | W-3 |
| amount | 2.0 | 2.0 | 4.0 | 2.0 | 4.0 |
| Weathering stabilizer | 0.1 | 0.1 | 0.1 | 0.1 | 0.1 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 20 | 20 | 20 | 20 | 20 |
| **Intermediate layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 2.0 | 2.0 | 2.0 | 2.0 | 2.0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0.2 | 0.2 | 0.2 | 0.2 | 0.2 |
| Hydrotalcite | 7.0 | 7.0 | 7.0 | 7.0 | 7.0 |
| Anti-fogging agent | 0 | 0 | 0 | 0 | 0 |
| Ultraviolet light absorber | 0 | 0 | 0 | 0 | 0 |
| Layer thickness (μm) | 60 | 60 | 60 | 60 | 60 |

Table 5-1 (II)

| Amount of ingredient (wt %) | Ex. B1 | Ex. B2 | Ex. B3 | Ex. B4 | Ex. B5 |
|---|---|---|---|---|---|
| **Outer layer** | | | | | |
| Resin compounding ratio (wt/wt) | i/iii =85/15 | i/iii =85/15 | i/iii =85/15 | i/iii =85/15 | i/iii =85/15 |
| Surface active agent (a) | 1.0 | 1.0 | 1.0 | 1.0 | 1.0 |
| Surface active agent (b) | 0 | 0 | 0 | 0 | 0 |
| Functional group-containing organic compound | | | | | |
| type<br>amount | -<br>0 | -<br>0 | -<br>0 | -<br>0 | -<br>0 |
| Weathering stabilizer | 0.2 | 0.2 | 0.2 | 0.2 | 0.2 |
| Hydrotalcite | 3.0 | 3.0 | 3.0 | 3.0 | 3.0 |
| Anti-fogging agent | 0 | 0 | 0 | 0 | 0 |
| Ultraviolet light absorber | 0 | 0 | 0 | 0 | 0 |
| Layer thickness (μm) | 20 | 20 | 20 | 20 | 20 |

Table 5-2 (I)

| Amount of ingredient (wt %) | Ex. B6 | Ex. B7 | Ex. B8 | Ex. B9 | Ex.B10 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 3.0 | 3.0 | 3.0 | 3.0 | 3.0 |
| Surface active agent (b) | 0 | 0 | 0 | 0 | 0 |
| Functional group-containing organic compound | | | | | |
| type<br>amount | W-4<br>2.0 | W-5<br>2.0 | W-6<br>2.0 | W-6<br>4.0 | W-7<br>2.0 |
| Weathering stabilizer | 0.1 | 0.1 | 0.1 | 0.1 | 0.1 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 20 | 20 | 20 | 20 | 20 |
| **Intermediate layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 2.0 | 2.0 | 2.0 | 2.0 | 2.0 |
| Surface active agent (b) | 0 | 0 | 0 | 0 | 0 |
| Functional group-containing organic compound | | | | | |
| type<br>amount | -<br>0 | -<br>0 | -<br>0 | -<br>0 | -<br>0 |
| Weathering stabilizer | 0.2 | 0.2 | 0.2 | 0.2 | 0.2 |
| Hydrotalcite | 7.0 | 7.0 | 7.0 | 7.0 | 7.0 |
| Anti-fogging agent | 0 | 0 | 0 | 0 | 0 |
| Ultraviolet light absorber | 0 | 0 | 0 | 0 | 0 |
| Layer thickness (μm) | 60 | 60 | 60 | 60 | 60 |

Table 5-2 (II)

| Amount of ingredient (wt %) | Ex. B6 | Ex. B7 | Ex. B8 | Ex. B9 | Ex.B10 |
|---|---|---|---|---|---|
| **Outer layer** | | | | | |
| Resin compounding ratio (wt/wt) | i/iii =85/15 | i/iii =85/15 | i/iii =85/15 | i/iii =85/15 | i/iii =85/15 |
| Surface active agent (a) | 1.0 | 1.0 | 1.0 | 1.0 | 1.0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0.2 | 0.2 | 0.2 | 0.2 | 0.2 |
| Hydrotalcite | 3.0 | 3.0 | 3.0 | 3.0 | 3.0 |
| Anti-fogging agent | 0 | 0 | 0 | 0 | 0 |
| Ultraviolet light absorber | 0 | 0 | 0 | 0 | 0 |
| Layer thickness (μm) | 20 | 20 | 20 | 20 | 20 |

Table 5-3 (I)

| Amount of ingredient (wt %) | Ex.B11 | Ex.B12 | Ex.B13 | Ex.B14 | Ex.B15 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 3.0 | 3.0 | 3.0 | 3.0 | 3.0 |
| Surface active agent (b) | 0 | 0 | 0 | 0 | 0 |
| Functional group-containing organic compound | | | | | |
| type | W-8 | W-8 | W-1 | W-2 | W-2 |
| amount | 2.0 | 4.0 | 2.0 | 2.0 | 4.0 |
| Weathering stabilizer | 0.1 | 0.1 | 0.1 | 0.1 | 0.1 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 20 | 20 | 100 | 100 | 100 |
| **Intermediate layer** | | | | | |
| Resin compounding ratio (wt/wt) | ii/iii =85/15 | ii/iii =85/15 | - | - | - |
| Surface active agent (a) | 2.0 | 2.0 | 0 | 0 | 0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0.2 | 0.2 | 0 | 0 | 0 |
| Hydrotalcite | 7.0 | 7.0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 60 | 60 | 0 | 0 | 0 |

Table 5-3 (II)

| Amount of ingredient (wt %) | Ex.B11 | Ex.B12 | Ex.B13 | Ex.B14 | Ex.B15 |
|---|---|---|---|---|---|
| **Outer layer** | | | | | |
| Resin compounding ratio (wt/wt) | i/iii =85/15 | i/iii =85/15 | - | - | - |
| Surface active agent (a) | 1.0 | 1.0 | 0 | 0 | 0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0.2 | 0.2 | 0 | 0 | 0 |
| Hydrotalcite | 3.0 | 3.0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 20 | 20 | 0 | 0 | 0 |

Table 5-4 (I)

| Amount of ingredient (wt %) | Ex.B16 | Ex.B17 | Ex.B18 | Ex.B19 | Ex.B20 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 3.0 | 3.0 | 3.0 | 3.0 | 3.0 |
| Surface active agent (b) | 0 | 0 | 0 | 0 | 0 |
| Functional group-containing organic compound | | | | | |
| type | W-3 | W-3 | W-4 | W-5 | W-6 |
| amount | 2.0 | 4.0 | 2.0 | 2.0 | 2.0 |
| Weathering stabilizer | 0.1 | 0.1 | 0.1 | 0.1 | 0.1 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 100 | 100 | 100 | 100 | 100 |
| **Intermediate layer** | | | | | |
| Resin compounding ratio (wt/wt) | - | - | - | - | - |
| Surface active agent (a) | 0 | 0 | 0 | 0 | 0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0 | 0 | 0 | 0 | 0 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 0 | 0 | 0 | 0 | 0 |

Table 5-4 (II)

| Amount of ingredient (wt %) | Ex.B16 | Ex.B17 | Ex.B18 | Ex.B19 | Ex.B20 |
|---|---|---|---|---|---|
| **Outer layer** | | | | | |
| Resin compounding ratio (wt/wt) | - | - | - | - | - |
| Surface active agent (a) | 0 | 0 | 0 | 0 | 0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0 | 0 | 0 | 0 | 0 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 0 | 0 | 0 | 0 | 0 |

Table 5-5 (I)

| Amount of ingredient (wt %) | Ex.B21 | Ex.B22 | Ex.B23 | Ex.B24 | Ex.B25 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 3.0 | 3.0 | 3.0 | 3.0 | 3.0 |
| Surface active agent (b) | 0 | 0 | 0 | 0 | 3.0 |
| Functional group-containing organic compound | | | | | |
| type | W-6 | W-7 | W-8 | W-8 | W-3 |
| amount | 2.0 | 4.0 | 2.0 | 2.0 | 2.0 |
| Weathering stabilizer | 0.1 | 0.1 | 0.1 | 0.1 | 0.1 |
| Hydrotalcite | 0 | 0 | 0 | 0 | 0 |
| Anti-fogging agent | 0 | 0 | 0 | 0 | 0.1 |
| Ultraviolet light absorber | 0 | 0 | 0 | 0 | 0 |
| Layer thickness (μm) | 100 | 100 | 100 | 100 | 20 |
| **Intermediate layer** | | | | | |
| Resin compounding ratio (wt/wt) | - | - | - | - | ii/iii =85/15 |
| Surface active agent (a) | 0 | 0 | 0 | 0 | 0 |
| Surface active agent (b) | 0 | 0 | 0 | o | 20 |
| Functional group-containing organic compound | | | | | |
| type | - | - | - | - | - |
| amount | 0 | 0 | 0 | 0 | 0 |
| Weathering stabilizer | 0 | 0 | 0 | 0 | 0.2 |
| Hydrotalcite | 0 | 0 | 0 | 0 | 10.0 |
| Anti-fogging agent | 0 | 0 | 0 | 0 | 0.1 |
| Ultraviolet light absorber | 0 | 0 | 0 | 0 | 0 |
| Layer thickness (μm) | 0 | 0 | 0 | 0 | 60 |

Table 5-5 (II)

| Amount of ingredient (wt %) | Ex.B21 | Ex.B22 | Ex.B23 | Ex.B24 | Ex.B25 |
|---|---|---|---|---|---|
| **Outer layer** | | | | | |
| Resin compounding ratio (wt/wt) | - | - | - | - | i/iii =85/15 |
| Surface active agent (a) | 0 | 0 | 0 | 0 | 0 |
| Surface active agent (b) | 0 | 0 | 0 | 0 | 2.0 |
| Functional group-containing organic compound | | | | | |
| type | - | - | - | - | - |
| amount | 0 | 0 | 0 | 0 | 0 |
| Weathering stabilizer | 0 | 0 | 0 | 0 | 0.2 |
| Hydrotalcite | 0 | 0 | 0 | 0 | 3.0 |
| Anti-fogging agent | 0 | 0 | 0 | 0 | 0 |
| Ultraviolet light absorber | 0 | 0 | 0 | 0 | 0 |
| Layer thickness (μm) | 0 | 0 | 0 | 0 | 20 |

Table 5-6 (I)

| Amount of ingredient (wt %) | Ex.B26 | Ex.B27 | Ex.B28 | Ex.B29 | Ex.B30 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 0 | 0 | 0 | 0 | 0 |
| Surface active agent (b) | 3.0 | 3.0 | 3.0 | 3.0 | 3.0 |
| Functional group-containing organic compound | | | | | |
| type | W-3 | W-3 | W-3 | W-3 | W-3 |
| amount | 2.0 | 2.0 | 2.0 | 2.0 | 2.0 |
| Weathering stabilizer | 0.1 | 0.1 | 0.1 | 0.1 | 0.1 |
| Hydrotalcite | 0 | 0 | 0 | 0 | 0 |
| Anti-fogging agent | 0.1 | 0.1 | 0.1 | 0.1 | 0.1 |
| Ultraviolet light absorber | 0.2 | 0 | 0 | 0 | 0 |
| Layer thickness (μm) | 20 | 26 | 30 | 20 | 20 |
| **Intermediate layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 0 | 0 | 0 | 0 | 0 |
| Surface active agent (b) | 2.0 | 2.0 | 2.0 | 2.0 | 2.0 |
| Functional group-containing organic compound | | | | | |
| type | - | - | - | - | W-3 |
| amount | 0 | 0 | 0 | 0 | 2.0 |
| Weathering stabilizer | 0.2 | 0.2 | 0.2 | 0.2 | 0.2 |
| Hydrotalcite | 10.0 | 10.0 | 10.0 | 10.0 | 10.0 |
| Anti-fogging agent | 0.1 | 0.1 | 0.1 | 0.1 | 0.1 |
| Ultraviolet light absorber | 2.5 | 0 | 0 | 0 | 0 |
| Layer thickness (μm) | 60 | 78 | 90 | 60 | 60 |

Table 5-6 (II)

| Amount of ingredient (wt %) | Ex.B26 | Ex.B27 | Ex.B28 | Ex.B29 | Ex.B30 |
|---|---|---|---|---|---|
| **Outer layer** | | | | | |
| Resin compounding ratio (wt/wt) | i/iii =85/15 | i/iii =85/15 | i/iii =85/15 | i/iii =85/15 | i/iii =85/15 |
| Surface active agent (a) | 0 | 0 | 0 | 0 | 0 |
| Surface active agent (b) | 2.0 | 2.0 | 2.0 | 2.0 | 2.0 |
| Functional group-containing organic compound | | | | | |
| type | - | - | - | W-3 | W-3 |
| amount | 0 | 0 | 0 | 2.0 | 2.0 |
| Weathering stabilizer | 0.2 | 0.2 | 0.2 | 0.2 | 0.2 |
| Hydrotalcite | 3.0 | 3.0 | 3.0 | 3.0 | 3.0 |
| Anti-fogging agent | 0 | 0 | 0 | 0 | 0 |
| Ultraviolet light absorber | 2.5 | 0 | 0 | 0 | 0 |
| Layer thickness (μm) | 20 | 26 | 30 | 20 | 20 |

Table 5-7 (I)

| Amount of ingredient (wt %) | Ex.B31 | Ex.B32 | Ex.B33 | Ex.B34 | Ex.B35 |
|---|---|---|---|---|---|
| **Inner layer** | | | | | |
| Resin compounding ratio (wt/wt) | ii/iii =85/15 | ii/iii =85/15 | ii/iii =85/15 | ii/iii =85/15 | ii/iii =85/15 |
| Surface active agent (a) | 0 | 0 | 0 | 0 | 0 |
| Surface active agent (b) | 3.0 | 3.0 | 3.0 | 3.0 | 3.0 |
| Functional group-containing organic compound | | | | | |
| type | W-3 | W-3 | W-3 | W-3 | W-3 |
| amount | 2.0 | 2.0 | 2.0 | 2.0 | 2.0 |
| Weathering stabilizer | 0.1 | 0.1 | 0.1 | 0.1 | 0.1 |
| Hydrotalcite | 0 | 0 | 0 | 0 | 10 |
| Anti-fogging agent | 0.1 | 0.1 | 0.1 | 0.1 | 0.1 |
| Ultraviolet light absorber | 0 | 2.5 | 0 | 0 | 0 |
| Layer thickness (μm) | 100 | 100 | 130 | 150 | 100 |
| **Intermediate layer** | | | | | |
| Resin compounding ratio (wt/wt) | - | - | - | - | - |
| Surface active agent (a) | 0 | 0 | 0 | 0 | 0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0 | 0 | 0 | 0 | 0 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 0 | 0 | 0 | 0 | 0 |

Table 5-7 (II)

| Amount of ingredient wt % | Ex.B31 | Ex.B32 | Ex.B33 | Ex.B34 | Ex.B35 |
|---|---|---|---|---|---|
| **Outer layer** | | | | | |
| Resin compounding ratio (wt/wt) | - | - | - | - | - |
| Surface active agent (a) | 0 | 0 | 0 | 0 | 0 |
| Surface active agent (b) | 0 | 0 | 0 | 0 | 0 |
| Functional group-containing organic compound | | | | | |
| type | - | - | - | - | - |
| amount | 0 | 0 | 0 | 0 | 0 |
| Weathering stabilizer | 0 | 0 | 0 | 0 | 0 |
| Hydrotalcite | 0 | 0 | 0 | 0 | 0 |
| Anti-fogging agent | 0 | 0 | 0 | 0 | 0 |
| Ultraviolet light absorber | 0 | 0 | 0 | 0 | 0 |
| Layer thickness (μm) | 0 | 0 | 0 | 0 | 0 |

Table 5-8 (I)

| Amount of ingredient (wt %) | Comparative Example B1 | Comparative Example B2 |
|---|---|---|
| **Inner layer** | | |
| Resin compounding ratio (wt/wt) | ii/iii =85/15 | ii/iii =85/15 |
| Surface active agent (a) | 3.0 | 3.0 |
| Surface active agent (b) | 0 | 0 |
| Functional group-containing organic compound | | |
| type | - | - |
| amount | 0 | 0 |
| Weathering stabilizer | 0.1 | 0.1 |
| Hydrotalcite | 0 | 0 |
| Anti-fogging agent | 0 | 0 |
| Ultraviolet light absorber | 0 | 0 |
| Layer thickness (μm) | 20 | 100 |
| **Intermediate layer** | | |
| Resin compounding ratio (wt/wt) | ii/iii =85/15 | - |
| Surface active agent (a) | 2.0 | 0 |
| Surface active agent (b) | 0 | 0 |
| Functional group-containing organic compound | | |
| type | - | - |
| amount | 0 | 0 |
| Weathering stabilizer | 0.2 | 0 |
| Hydrotalcite | 7.0 | 0 |
| Anti-fogging agent | 0 | 0 |
| Ultraviolet light absorber | 0 | 0 |
| Layer thickness (μm) | 60 | 0 |

Table 5-8 (II)

| Amount of ingredient (wt %) | Comparative Example B1 | Comparative Example B2 |
|---|---|---|
| **Outer layer** | | |
| Resin compounding ratio (wt/wt) | i/iii =85/15 | - |
| Surface active agent (a) | 1.0 | 0 |
| Surface active agent (b) | 0 | 0 |
| Functional group-containing organic compound | | |
| type<br>amount | -<br>0 | -<br>0 |
| Weathering stabilizer | 0.2 | 0 |
| Hydrotalcite | 3.0 | 0 |
| Anti-fogging agent | 0 | 0 |
| Ultraviolet light absorber | 0 | 0 |
| Layer thickness (μm) | 20 | 0 |

Table 6-1

| | Examples | | | | | | | | | | | |
|---|---|---|---|---|---|---|---|---|---|---|---|---|
| | B1 | B2 | B3 | B4 | B5 | B6 | B7 | B8 | B9 | B10 | B11 | B12 |
| Moldability | ○ | ○ | ○ | ○ | ○ | ○ | ○ | ○ | ○ | ○ | ○ | ○ |
| Initial anti-fogging properties | ○ | ○ | ○ | ○ | ○ | ○ | ○ | ○ | ○ | ○ | ○ | ○ |
| Retention of anti-fogging properties | △ | △ | △ | ○ | ○ | ○ | △ | △ | △ | △ | △ | △ |

Table 6-2

| | Examples | | | | | | | | |
|---|---|---|---|---|---|---|---|---|---|
| | B13 | B14 | B15 | B16 | B17 | B18 | B19 | B20 | B21 |
| Moldability | ○ | ○ | ○ | ○ | ○ | ○ | ○ | ○ | ○ |
| Initial anti-fogging properties | ○ | ○ | ○ | ○ | ○ | ○ | ○ | ○ | ○ |
| Retention of anti-fogging properties | △ | △ | △ | ○ | ○ | ○ | △ | △ | △ |

Table 6-3

| | Examples | | | | | | | | |
|---|---|---|---|---|---|---|---|---|---|
| | B22 | B23 | B24 | B25 | B26 | B27 | B28 | B29 | B30 |
| Moldability | ○ | ○ | ○ | ○ | ○ | ○ | ○ | ○ | ○ |
| Initial anti-fogging properties | ○ | ○ | ○ | ○ | ○ | ○ | ○ | ○ | ○ |
| Retention of anti-fogging properties | △ | △ | △ | ○ | ○ | ○ | ○ | ○ | ○ |

Table 6-4

| | Examples | | | | | Comparative Examples | |
|---|---|---|---|---|---|---|---|
| | B31 | B32 | B33 | B34 | B35 | B1 | B2 |
| Moldability | ○ | ○ | ○ | ○ | ○ | ○ | ○ |
| Initial anti-fogging properties | ○ | ○ | ○ | ○ | ○ | ○ | ○ |
| Retention of anti-fogging properties | ○ | ○ | ○ | ○ | ○ | X | X |

INDUSTRIAL APPLICABILITY

If the above-described thermoplastic resin composition is molded into films, the films exhibit antistatic properties and anti-fogging properties immediately after the films are produced, and they retain stable properties over a long period of time. Therefore, the films can be favorably used as, for example, agricultural films.

**Claims**

1. A thermoplastic resin composition comprising:

   (A) a thermoplastic resin,
   (B) a surface active agent in an amount of 0.01 to 30 parts by weight based on 100 parts by weight of the thermoplastic resin (A), and
   (C) an organic compound in an amount of 0.01 to 30 parts by weight based on 100 parts by weight of the thermoplastic resin (A), said organic compound being a functional group-containing organic compound and containing 0.1 to 10 mmol/g of a functional group having two atoms a, b bonded to each other whose atomic charges Ea, Eb, as determined by calculation of molecular orbital method, satisfy the following relation (1):

   $$0.25 \leq |Ea-Eb| \leq 0.7 \quad (1)$$

   wherein Ea and Eb represent atomic charges of the atom a and the atom b, respectively.

2. The thermoplastic resin composition as claimed in claim 1, wherein the atomic charges Ea, Eb of the two atoms satisfy the following relation (2):

   $$0.4 \leq |Ea-Eb| \leq 0.7 \quad (2)$$

   wherein Ea and Eb represent atomic charges of the atom a and the atom b, respectively.

3. The thermoplastic resin composition as claimed in claim 1, wherein the functional group satisfying the relation (1) is at least one group selected from a carboxyl group, a carbonyl group, a hydroxyl group, an aromatic group, an amino group, a sulfone group and an ester group.

4. The thermoplastic resin composition as claimed in claim 2, wherein the functional group satisfying the relation (2) is at least one group selected from a carboxyl group, a carbonyl group, a hydroxyl group, an amino group, a sulfone group and an ester group.

5. The thermoplastic resin composition as claimed in claim 1, wherein the functional group-containing organic compound (C) is an ester of at least one rosin acid selected from dehydroabietic acid, dihydroabietic acid and dihydropimaric acid, or an ester of a derivative of the rosin acid.

6. The thermoplastic resin composition as claimed in claim 1, wherein the functional group-containing organic compound (C) is at least one compound selected from the group consisting of a hydrocarbon resin, a modified polyolefin, an oxidized polyolefin and a natural wax.

7. The thermoplastic resin composition as claimed in any one of claims 1 to 6, wherein the thermoplastic resin (A) is

at least one thermoplastic resin selected from a polyolefin, a polyamide, a polyester, a polyacetal, polystyrene, an acrylonitrile/butadiene/styrene copolymer, a polymethacrylate, a polycarbonate, polyphenylene oxide, polyvinyl chloride, polyvinylidene chloride, polyvinyl acetate, an ethylene/vinyl acetate copolymer and an ethylene/(meth)acrylate copolymer.

**8.** The thermoplastic resin composition as claimed in any one of claims 1 to 6, wherein the thermoplastic resin (A) is at least one thermoplastic resin selected from the group consisting of a polyolefin, polyvinyl chloride and an ethylene/vinyl acetate copolymer.

**9.** The thermoplastic resin composition as claimed in any one of claims 1 to 8, wherein the surface active agent (B) is a nonionic surface active agent having a molecular weight of less than 1,000.

**10.** The thermoplastic resin composition as claimed in any one of claims 1 to 9, wherein the surface active agent (B) is at least one compound selected from a glycerol fatty ester, a glycerol fatty diester, a glycerol fatty triester, a polyethylene glycol fatty ester, a higher alcohol ethylene oxide adduct, N,N-bis(2-hydroxyethyl)aliphatic amine, N,N-bis(2-hydroxyisopropyl)aliphatic amine, N,N-bis(2-hydroxyethyl)aliphatic amide and N,N-bis(2-hydroxyisopropyl)aliphatic amide.

**11.** The thermoplastic resin composition as claimed in any one of claims 1 to 10, wherein the thermoplastic resin (A) has a weight-average molecular weight (Mw) of not less than 60,000.

**12.** The thermoplastic resin composition as claimed in claim 6, wherein the modified polyolefin as the functional group-containing organic compound (C) is obtained by graft copolymerizing a polyolefin with at least one monomer selected from the group consisting of an unsaturated carboxylic acid, its derivative and an ethylene type unsaturated monomer containing at least one of a hydroxyl group, an amino group and a sulfone group, and has a graft modification degree of 0.1 to 20 % by weight and an intrinsic viscosity [$\eta$] of 0.01 to 1.8 dl/g.

**13.** The thermoplastic resin composition as claimed in claim 6, wherein the oxidized polyolefin as the functional group-containing organic compound (C) is obtained by oxidizing a polyolefin by an oxygen-containing gas and has an acid value of 0.1 to 100 mgKOH/g and an intrinsic viscosity [$\eta$] of 0.01 to 0.6 dl/g.

**14.** The thermoplastic resin composition as claimed in claim 6, wherein the natural wax as the functional group-containing organic compound (C) is at least one wax selected from the group consisting of carnauba wax, rice wax, bees wax, montan wax and saponified waxes obtained by at least partly saponifying these waxes.

**15.** The thermoplastic resin composition as claimed in claim 5, wherein the rosin ester as the functional group-containing organic compound (C) is an ester of at least one rosin acid selected from a rosin acid represented by the following formula (Ia) and a rosin acid represented by the following formula (Ib):

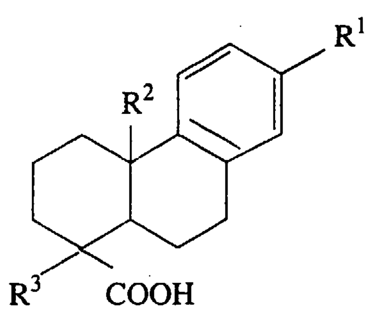

(Ia)

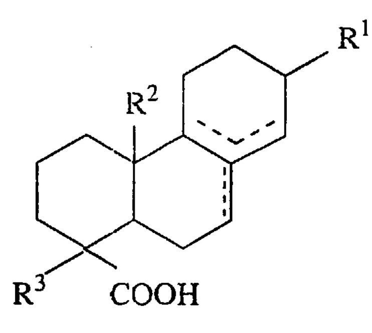

(Ib)

wherein $R^1$, $R^2$ and $R^3$ are each a hydrogen atom, an alkyl group, a cycloalkyl group or an aryl group, and may be the same or different.

**16.** The thermoplastic resin composition as claimed in claim 15, wherein in the formulas (Ia) and (Ib), $R^1$ is a isopropyl group, and $R^2$ and $R^3$ are each a methyl group.

**17.** The thermoplastic resin composition as claimed in claim 6, wherein the hydrocarbon resin as the functional group-containing organic compound (C) is a hydrocarbon resin obtained by polymerizing (C-1) a styrene type monomer represented by the following formula (II) and at least one monomer selected from the group consisting of (C-2) a fraction of 4 and 5 carbon atoms produced as a by-product in petroleum refining or petroleum cracking and (C-3) an indene type monomer represented by the following formula (III), in the presence of a Friedel-Crafts catalyst;

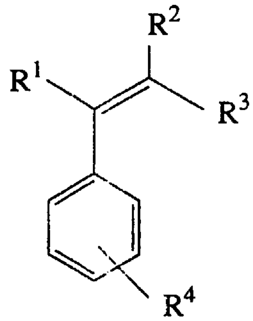

(II)

wherein $R^1$, $R^2$, $R^3$ and $R^4$ may be the same or different, and are each a hydrogen atom or an alkyl group of 4 or less carbon atoms;

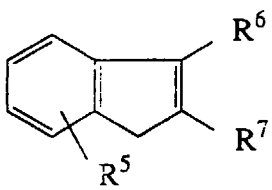

(III)

wherein $R^5$, $R^6$ and $R^7$ may be the same or different, and are each a hydrogen atom or an alkyl group of 6 or less carbon atoms.

**18.** The thermoplastic resin composition as claimed in claim 17, wherein the content of the styrene type monomer (C-1) in the hydrocarbon resin is 30 to 99 % by mol.

**19.** A film or a sheet each having a layer comprising the thermoplastic resin composition as claimed in any one of claims 1 to 18.

**20.** The film or the sheet as claimed in claim 19, which is an agricultural film or an agricultural sheet.

**INTERNATIONAL SEARCH REPORT**

International application No. PCT/JP97/04272

**A. CLASSIFICATION OF SUBJECT MATTER** Int. Cl[6] C08L101/00, C08K5/00, C08K5/04, C08L93/04, C08L57/02, B32B27/18, B32B27/28, C08J5/18, A01G9/14, C08L23/00, C08L27/06

According to International Patent Classification (IPC) or to both national classification and IPC

**B. FIELDS SEARCHED**

Minimum documentation searched (classification system followed by classification symbols) Int. Cl[6] C08L101/00-101/14, C08K5/00-5/59, C08L93/04, C08L57/02, B32B27/00-27/42, C08J5/18, A01G9/14, C08L23/00, C08L27/06

Documentation searched other than minimum documentation to the extent that such documents are included in the fields searched

| | |
|---|---|
| Jitsuyo Shinan Koho | 1926 - 1997 |
| Kokai Jitsuyo Shinan Koho | 1971 - 1997 |
| Toroku Jitsuyo Shinan Koho | 1994 - 1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP, 5-59242, A (Asahi Denka Kogyo K.K.), March 9, 1993 (09. 03. 93), Claims (Family: none) | 1-4, 7-11, 19-20<br>5, 12-18 |
| X<br>A | JP, 58-101133, A (Denki Kagaku Kogyo K.K.), June 16, 1983 (16. 06. 83), Claims; page 3, upper left column, lines 1 to 10 (Family: none) | 1-5, 7-11, 15-16, 19<br>6, 12-14, 17-18, 20 |
| X<br>A | JP, 45-265, B1 (Tokyo Shibaura Electric Co., Ltd.), January 7, 1970 (07. 01. 70), Claims (Family: none) | 1-5, 7-11, 15-16, 19<br>6, 12-14, 17-18, 20 |

[X] Further documents are listed in the continuation of Box C. [ ] See patent family annex.

- * Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| February 27, 1998 (27. 02. 98) | March 3, 1998 (03. 03. 98) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP97/04272

C (Continuation). DOCUMENTS CONSIDERED TO BE RELEVANT

| Category* | Citation of document, with indication, where appropriate, of the relevant passages | Relevant to claim No. |
|---|---|---|
| X | JP, 2-49050, A (Sakai Chemical Industry Co., Ltd.), February 19, 1990 (19. 02. 90), Claims (Family: none) | 1-4, 7-11, 19-20 |
| A | | 5-6, 12-18 |
| X | JP, 7-166002, A (Tosoh Corp.), June 27, 1995 (27. 06. 95), Claims (Family: none) | 1-4, 7-11, 19-20 |
| A | | 5-6, 12-18 |
| X | JP, 7-11062, A (Tosoh Corp.), January 13, 1995 (13. 01. 95), Claims (Family: none) | 1-4, 7-11, 19-20 |
| A | | 5-6, 12-18 |

Form PCT/ISA/210 (continuation of second sheet) (July 1992)